# NEW EUROPEAN PATENT SPECIFICATION

(11) **EP 3 863 864 B2**
(45) Date of publication and mention of the opposition decision: **28.01.2026**
(45) Mention of the grant of the patent: 07.12.2022
(21) Application number: 19795461.3
(22) Date of filing: 11.10.2019
(51) Int. Cl.: B42D 25/328

(54) **OPTICAL SECURITY DEVICE**
OPTISCHE SICHERHEITSVORRICHTUNG
DISPOSITIF OPTIQUE DE SÉCURITÉ

(30) Priority: 12.10.2018 GB 201816641
(43) Date of publication of application: 18.08.2021
(73) Proprietor: IQS Group a.s., 250 68 Husinec - Rez (CZ)
(72) Inventor: SKEREN, Marek, 280 02 Nova Ves I (CZ); RYZI, Zbynek, Littleton, Massachusetts 01460 (US); NAHÁLKA, Roman, 266 01 Beroun (CZ)
(74) Representative: Linn, Samuel Jonathan
(86) International application number: PCT/EP2019/077602
(87) International publication number: WO 2020/074706

(56) References cited:
- EP-A2- 1 564 605
- US-A1- 2007 223 074

## Description

### TECHNICAL FIELD

This invention relates to an optical security device, more particularly (though not exclusively) to an optical security device incorporating a recorded or encoded optically variable image, especially (though not exclusively) a holographic image, which is able to be reconstructed and viewed for security, authentication or identification purposes. Such a security device is usable for example for protection, authentication or identification of various items or objects including securities, credit and debit cards, banknotes, tickets, passports, visas, ID cards, branded goods, and various other items whose value or nature benefits from an added security feature. More particularly, though not exclusively, the invention relates in its various aspects to an optical security device, or an optical security feature of or included in such a device, to a method of production of such an optical security device, and to a method of reconstruction of an image recorded or encoded in such an optical security device, which reconstruction is for security, authentication or identification purposes.

### BACKGROUND AND PRIOR ART

As used herein, the term "optical security device" is to be construed broadly and means any physical or functional device, apparatus, object, item or thing that relies on optics or the manipulation or effects of electromagnetic radiation for, and is designed and intended for use in connection with, one or more security purposes, e.g. for protection, authentication or identification purposes of an item of property or some other object, item or thing. Such a "device" may be a physical thing *per se* which may be incorporated into or included in or on the structure of the item, object or thing whose security is to be so effected, or it may be an inherent part, portion or feature of the item, object or thing itself whose security is to be so effected.

As used herein, the term "optically variable image" means an image whose visual appearance to a viewer changes with an angle at which the viewer observes the image and with an angle at which the image is illuminated by light for the purpose of its reconstruction. For example, the change in the image's appearance may be perceived by the viewer as a change in one or more parameters of the image reconstructed, such as its shape, configuration, colour, brightness or angle of view (in the case of a 3D image), and/or even as a change in the identity of the image itself, or one or more portions of the image itself, that is reconstructed. Certain types of hologram often record or encode optically variable images.

As used herein, the terms "recorded" and "encoded", as applied to the form in which the optically variable image or portion thereof is incorporated or represented within the optical structure of the device, encompasses the provision of any form of record of the said image or portion thereof, whether it be an original or "master" recorded or encoded representation of the said image or portion thereof in the optical structure of the device, or a derivative or replicated representation of the said image or portion thereof in the optical structure of the device. Such "recording" and "encoding" may also encompass "embossing" or other physical application or provision of the representation of the image or portion thereof in the material of the optical structure, e.g. in the form of optical relief thereon or therein, as well as encompassing any other optically functional manner of provision of the representation of the image or portion thereof in the material of the optical structure.

Security features of the nature of holograms are frequently incorporated as, or so as to form, security devices in the structures of items or objects, especially printed items, such as securities, credit and debit cards, banknotes, tickets, passports, visas, ID cards and other valuable items, for the purpose of identifying them or authenticating them as genuine, or other security-related purpose. Typically the hologram is a record or encoded representation of a predefined optically variable security image, e.g. of a unique object, picture, pattern, arrangement of alphanumeric or other characters, or any combination thereof, often a three dimensional image or an image placed in three dimensional space in front of and/or beyond the device itself, and the recreation of the image under appropriate viewing conditions, e.g. white light, enables the authenticity of the item to be confirmed.

Such a holographic security feature or device can be incorporated for example within a strip or stripe that is integrated into the structure of the item or object in question, so as to be visible when a face of the item or object is viewed. The strip or stripe may contain any number, type or combination of various security features or devices, including security holograms. Such a strip or stripe may for example be generally straight or curved in configuration, and/or it may be formed by a combination of a plurality of variously shaped graphical regions or shapes, and/or it may be patterned. Generally however the width of the strip or stripe is characteristically smaller than its length, and its width may be either generally substantially constant, or alternatively variable, along the length of the strip or stripe.

Often the optically variable image record-containing strip or stripe may even contain a plurality of various forms of security features, including any number of overt or covert features, e.g. graphics, holograms, micro- or nano-graphics, diffractive or non-diffractive images and structures, hidden images, and suchlike. These features are generally incorporated into the strip or stripe material typically in the form of appropriate optical structures comprising modulations of the strip/stripe's surface, volume or internal optical properties of its material.

In many cases the physical width of the strip/stripe is actually quite narrow, yet it desirably needs to include one or more recognizable graphic or holographic images viewable by the naked eye or by use of a simple or readily available reading device. This certainly poses a challenge to a designer who needs to satisfy what are often conflicting requirements for a high level of complexity and thus security of the security feature(s) contained in a very small area of the device, yet at the same time making it/them conveniently recognizable. However, with ever increasing needs for ever more advanced and/or new types of security features that are less prone to counterfeiting and permit higher degrees of security identification, authentication or verification, known hologram-based security features only go so far, and many fail to meet the high or new demands of such security features that are increasingly being required in the industry. Furthermore, although in certain known security feature-based applications this issue can to some extent be addressed by the use of additional encrypted features or special unnatural visual effects or their combinations, such alternative security elements are at best only a partial solution to the problem and often lead to unnecessarily complex security structures that are expensive to produce and apply and are overly difficult or complicated to read or view.

Thus, it is a primary object of the present invention to address this shortcoming in the art and to provide a new and improved, yet relatively cheap and easy to apply, form of security feature or device usable in a variety of security, authentication or identification scenarios, e.g. in securities, credit and debit cards, banknotes, tickets, passports, visas, ID cards, branded goods, and other valuable items, and which is capable of providing enhanced levels of optical security/authentication/identification capability.

Document EP 1 564 605 A2 discloses an optical security device according to the preamble of claim 1.

### SUMMARY OF THE INVENTION

Accordingly, in a first aspect of the present invention there is provided an optical security device comprising a recorded or encoded representation of an optically variable image, the image being reconstructable and viewable for security, authentication or identification purposes, the device comprising:
an optical structure in which there is recorded or encoded a representation of the optically variable image in the form of a plurality of portions of the complete image to be reconstructed,
wherein the respective said plurality of portions of the optically variable image can, when reconstructed, only be viewed in their totality by viewing the said image by each of (A) at or over a plurality of different viewing angles or angle ranges relative to the optical structure, and (B) at or over a plurality of different angles or ranges of angles of illumination of the optical structure,
and wherein the size, in at least one dimension, direction, axis or plane, of the complete image, when reconstructed, is greater than the corresponding size, in the same, or the respective same, dimension, direction, axis or plane, of a part of the optical structure having the said plurality of portions of the image collectively recorded or encoded therein.

In the preceding definition, the reference to the respective said plurality of portions of the optically variable image, when reconstructed, only being viewable "in their totality", means that the complete image is only viewable by virtue of all the portions thereof each being respectively reconstructed and viewed (e.g. in a sequential manner).

The optical variable image itself represents information for authentication or identification purposes in what may be a graphical or holographical form. Such information, i.e. the image, to be identified and/or used for authentication cannot be viewed in just one viewing step or viewing configuration (i.e. at a single combination of viewing angle/range of viewing angles and angle of illumination/range of angles of illumination), since the optical structure in which the image is recorded or encoded is purposely substantially smaller than the image itself (at least in one respective dimension), and as such provides only a small or narrow viewing window or aperture through which the image can be viewed, which forces the use of plural combinations of viewing angles and angles of illumination in order to view and fully identify all information represented by the image. All such information is distributed across a plurality of the image portions, and therefore also each portion of the image needs to be viewed in full in order to authenticate or identify all the information contained in the image.

In some embodiments of the invention in its various aspects, the fully viewed image may furthermore need to be decoded by a separate key provided by the designer of the image and the optical structure in which the image is recorded or encoded. Examples of such embodiments are described in detail further below.

As used herein, the term "portion", as referring to a part of the optically variable image either when it has been reconstructed or in its recorded or encoded form, means any part of the image in either form which is less than the whole thereof in either two dimensions or three dimensions or a combination of two and three dimensions. Such a part representing a "portion" may be any definable part of the image (in either form), and does not need to be separately or discretely viewable from any other part of the image, although it may indeed be separately or discretely viewable from one or more other parts of the image. Thus, such a part representing a "portion" of the image (in either form) may possibly overlap with or be definable so as to be at least partially in common with one or more other parts of the image. Furthermore, in the case of such a "portion" which is defined as a part of the image (in either form) which is less than the whole thereof in three dimensions, the meaning of "portion" may include a part of the image (in either form) which is different in appearance from the first-mentioned part or another part, even though those parts may not, when viewed, be physically distinct parts or regions or components of the complete image.

In the context of this invention, the references to "ranges of viewing angles" or "viewing angle ranges" relative to the optical structure and "ranges of angles of illumination" or "illumination angle ranges", in addition to specifically single or unique such "viewing angles" or "illumination angles", are included in order to take account of the fact that from a physics point of view, for any given optical structure of the kind that embodiments of the invention are concerned with, there may well be a range of viewing or illumination angles - not just one single or unique such angle - at which any given portion may be viewable. In many embodiments this feature of the viewing or illumination angle being more appropriately or correctly defined as an angular range may therefore be an inherent property of the physics of the reconstructable recorded/encoded image. Accordingly, as used throughout this specification, references to "a [or a given or respective] viewing angle" and "an [or a given or respective] angle of illumination" should, unless stated or the context dictates otherwise, be construed as encompassing also "a [or a given or respective] range of viewing angles" and "a [or a given or respective] range of angles of illumination", respectively.

In some embodiments of the optical security device of the invention the optical structure may have recorded or encoded therein a representation of the optically variable image in the form of a plurality of portions of the complete image to be reconstructed,
wherein each respective one of some or all of the said plurality of portions of the optically variable image can, when reconstructed, only be viewed in full by viewing the said respective image portion by each of (A) at or over a respective range of viewing angles (i.e. at or over more than one specific viewing angle) relative to the optical structure, and (B) at or over a range of angles of illumination (i.e. at or over more than one specific illumination angle) of the optical structure.

In some embodiments of the optical security device of the invention the optical structure may have recorded or encoded therein a representation of the optically variable image in the form of a plurality of discrete portions of the complete image to be reconstructed,
wherein each respective one of the said plurality of portions of the optically variable image can, when reconstructed, only be viewed by viewing the respective said image portion by each of (E) at or over a respective viewing angle or angle range relative to the optical structure, and (F) at or over a respective angle or angle range of illumination of the optical structure which are, respectively, different from the (E) viewing angle/angle range and (F) angle/angle range of illumination at or over which at least one other of the said image portions is viewable when reconstructed.

In some embodiments, a respective viewing angle/angle range and angle/angle range of illumination at or over which a, or any, given one of the image portions can be viewed, when reconstructed, may be, respectively, -substantially the same viewing angle/angle range and angle/angle range of illumination at or over which at least one other of the said image portions, but not all of those other said image portions, (optionally or at least some of, but not all of, the remaining reconstructed image portions) is/are viewable when reconstructed.

Put another way, in some embodiments, a respective viewing angle/angle range and angle/angle range of illumination at or over which a, or any, given one of the image portions can be viewed, when reconstructed, may be, respectively, -substantially different from the respective viewing angle(s)/angle range(s) and angle(s)/angle range(s) of illumination at or over which at least one other of the of the reconstructed image portions (optionally or at least some of the remaining reconstructed image portions) is/are viewable.

Thus, in such embodiments of the preceding two paragraphs, in order for the complete reconstructed image to be viewable in its totality - which is to say, in order for all the portions of the complete reconstructed image to each be respectively reconstructable and viewable (e.g. in a sequentially manner) - it may be necessary for at least two different viewing angles/angle ranges and at least two different angles/angle ranges of illumination to be employed to view all the reconstructed image portions.

However, in other such embodiments, a respective viewing angle/angle range and angle/angle range of illumination at or over which a, or any, given one of the image portions can be viewed, when reconstructed, may be, respectively, substantially different from the respective viewing angles/angle ranges and angles/angle ranges of illumination at or over which substantially all the other reconstructed image portions are viewable.

Thus, in such other embodiments of the preceding paragraph, in order for the complete reconstructed image to be viewable in its totality - which is to say, in order for all the portions of the complete reconstructed image to each be respectively reconstructable and viewable (e.g. in a sequential manner) - it may be necessary for a plurality of different viewing angles/angle ranges and a plurality of different angles/angle ranges of illumination to be employed to view respective ones of the plurality of reconstructed image portions. In some such embodiments, each respective viewing angle/angle range and angle/angle range of illumination at or over which a respective reconstructed image portion is viewable may be unique to that respective reconstructed image portion.

In some embodiments of the optical security device of the first aspect of the invention, the size, in at least one dimension, direction, axis or plane, of one or more given ones of the viewable portions of the reconstructed image may be greater than the corresponding size, in the same, or the respective same, dimension, direction, axis or plane, of a part of the optical structure having the said one or more given optically variable image portion(s) recorded or encoded therein.

Alternatively, in some other embodiments of the optical security device of the first aspect of the invention, the size, in at least one dimension, direction, axis or plane, of a given part of the optical structure having one or more given ones of the optically variable image portion(s) recorded or encoded therein may be smaller than the corresponding size, in the same, or the respective same, dimension, direction, axis or plane, of the said one or more respective viewable portion(s) of the reconstructed image.

In many embodiments of the invention in its various aspects the recorded or encoded representation of the optically variable image may be a hologram. In other words, in such embodiments the recorded or encoded representation of the optically variable image may be a holographic recorded or encoded image.

In various embodiments of the invention in its various aspects, the recorded or encoded representation of the optically variable image may be a two-dimensional (2-D) or a three-dimensional (3-D) hologram, especially an encoded 2-D or 3-D image or an image of any suitable 2-D or 3-D object, picture, pattern, one or more (e.g. a series of) alphanumeric or other (e.g. typographical) characters, or other arrangement of one more visual components or elements. The encoded image may even, in some embodiment forms, be a combination of one or more 2-D objects and one or more 3-D objects. Such an image or object, picture, pattern, one or more (e.g. a series of) alphanumeric or other (e.g. typographical) characters, or other arrangement may have or comprise any one or more colour(s) or may be composed of any combination of any of a plurality of colours, optionally including any desired auxiliary visual optical properties or features.

In some embodiments of the invention the optical structure having the portion(s) of the optically variable image recorded or encoded therein may be or comprise a DOVID (diffractive optically variable image device).

In some embodiments of the invention in its various aspects the optical structure may define a structure plane, especially a plane which is contained within the thickness of the optical structure and/or which is non-parallel to light incident on the optical structure during the reconstruction of the recorded or encoded image, and the reconstructed image may lie out of - i.e. it may lie wholly or at least partially to one side of, or possibly to each of both sides of - the said structure plane. In some such embodiments the reconstructed image may lie out of the structure plane on the side thereof opposite to that from which the illuminating light is incident thereon.

In some embodiment forms of the above-defined security device, the device may take the form of a security feature which has already been applied to or incorporated into the structure of an item or object whose security, authentication or identification is required. However, in other embodiment forms, the above-defined security device may be provided in the form of a discrete security device or security element for application, affixation or incorporation into the structure of an item or object whose security, authentication or identification is required.

In a second aspect of the present invention there is provided a method according to claim 12.

Various specific features of embodiments of the above-defined method of the second aspect of the invention may be the same as or correspond to any respective ones of the above- or below-defined specific features of embodiments of the device of first aspect of the invention.

Thus, in various practical embodiments of the above-defined production method, the aforementioned (i) recording or encoding, and (ii) incorporation or application/affixation/incorporation steps may be carried out in any order relative to each other. Thus, in various such embodiments, the step of incorporating the recorded/encoded image-containing optical structure into the item or object may be carried out either:
(a) substantially simultaneously with the recording/encoding step itself, or alternatively
(b) subsequent to the recording/encoding step itself.

Further alternatively, it may in yet other embodiments be possible for the step of incorporating the recorded/encoded image-containing optical structure onto or into the item or object may be carried out prior to the recording/encoding step itself.

In a third aspect of the present invention there is provided a method according to claim 13.

In those embodiments of the above authentication or identification method which utilise an embodiment optical security device in which:
the optical structure has recorded or encoded therein a representation of the optically variable image in the form of a plurality of discrete portions of the complete image to be reconstructed, and:
(i) each respective one of the said plurality of portions of the optically variable image can, when reconstructed, only be viewed by viewing the respective said image portion by each of (E) at or over a respective viewing angle or angle range relative to the optical structure, and (F) at or over a respective angle or angle range of illumination of the optical structure which are, respectively, different from the (E) viewing angle/angle range and (F) angle/angle range of illumination at or over which at least one other of the said image portions is viewable when reconstructed; or
(ii) the respective viewing angle/angle range and angle/angle range of illumination at or over which a, or any, given one of the image portions can be viewed, when reconstructed, are, respectively, substantially the same viewing angle/angle range and angle/angle range of illumination at or over which at least one other of the said image portions, but not all of those other said image portions, (optionally or at least some of, but not all of, the remaining reconstructed image portions) is/are viewable when reconstructed; or
(iii) the respective viewing angle/angle range and angle/angle range of illumination at or over which a, or any, given one of the image portions can be viewed, when reconstructed, are, respectively, substantially different from the respective viewing angle(s)/angle range(s) and angle(s)/angle range(s) of illumination at or over which at least one other of the of the reconstructed image portions (optionally or at least some of the remaining reconstructed image portions) is/are viewable;
the viewing step (b) may comprise:
(bi) viewing the or each respective one of the plurality of reconstructed portions of the complete optically variable image by (K) at or over, or only at or over, the or the respective viewing angle or angle range relative to the optical structure, and by (L) illuminating the optical structure at or over the respective angle or angle range of illumination, that are associated with that respective reconstructed image portion of the complete image; and/or
(bii) viewing respective ones of the plurality of reconstructed portions of the complete optically variable image at or over, or only at or over, respective ones of the plurality of different viewing angles/angle ranges and angles/angle ranges of illumination of the optical structure;
whereby the complete reconstructed optically variable image is viewable in its totality - which is to say, all the portions of the complete reconstructed image are each respectively reconstructable and viewable (e.g. in a sequentially manner) - by, or only by:
(ci) viewing the or each respective portion thereof at or over, or only at or over, the or the respective viewing angle/angle range and angle/angle range of illumination of the optical structure that is associated with that respective image portion, and/or
(cii) viewing respective ones of the plurality of reconstructed portions thereof at or over, or only at or over, the respective ones of the plurality of different viewing angles/angle ranges and angles/angle ranges of illumination of the optical structure,
as the case may be.

In the practising of many embodiments of the invention, the recorded or encoded optically variable image, or respective portions thereof, may be reconstructable by illumination of the optical structure, or a respective part or portion or region thereof, by electromagnetic radiation, especially electromagnetic radiation of a wavelength/frequency appropriate to the means used to record/encode and/or intended for reconstructing the image. Especially suitable electromagnetic radiation may be light in the visible region of the electromagnetic spectrum. Such visible light may for example have wavelengths in the approximate range of from about -380 nm up to about -780 nm.

As used herein, the term "image" is intended to be construed broadly, as encompassing not only visually perceptable "images" in the conventional sense, i.e. comprising one or more visually perceivable graphic or verbal (e.g. alphanumeric or pictorial or mathematical or linguistic) elements or characters or indicia or group(s) thereof, but also encompassing any other perceivable or detectable physical indicia or representation of any physical indicia that may serve a security, authentication or identification purpose.

Thus, as used herein, the term "viewing" as applied to the viewing of at least a portion of the reconstructed image is to be construed broadly as encompassing not only visual viewing thereof by one or more eyes of a human observer, but may also include detecting at least a portion of the image using an optically sensitive device, e.g. a camera, optionally in combination with suitable image processing hardware and/or software.

In some embodiments of the invention the viewing of a first one of the plurality of portions of the reconstructed image may comprise a first viewing step or operation in which that first portion, or that first portion only, of the reconstructed image is viewed. If desired or appropriate, in some such embodiments the viewing may further comprise one or more additional or further viewing steps or operations in each of which a respective additional or further one of the plurality of portions, or a respective additional or further one only of the plurality of portions, of the reconstructed image is viewed. In each of the aforementioned viewing steps or operations the viewing of each respective portion of the reconstructed image may, in some of the embodiments defined hereinabove, be carried out by viewing each respective portion of the image at or over a given, or at the unique, viewing angle or angle range relative to the optical structure and by illuminating the optical structure at or over a given, or at the unique, angle or angle range of illumination that is associated with that respective image portion.

Thus, in some embodiments of the invention the overall complete reconstructed image may be of such a size, substantially greater than that of the parts of the optical structure in which are recorded or encoded the various portions of the image, that it may only be viewable in its entirety upon a plurality of individual or discrete viewing steps or operations being carried out, each such viewing step or operation being such as to view a respective portion, or a respective portion only, especially a respective discrete portion or respective discrete portion only, of the complete reconstructed image, and further especially a respective discrete portion only of the complete reconstructed image independently of the viewing of any of the other portion(s) of the complete reconstructed image.

In particular, in some of the above-defined embodiments where plural portions of the complete reconstructed image are viewable independently of each other, the viewing of the complete reconstructed image may be accomplished e.g. by illuminating corresponding respective portions of the recorded or encoded image in a plurality of discrete illumination steps or operations. Alternatively (or perhaps even additionally), the viewing of the complete reconstructed image may be accomplished by illuminating the recorded or encoded image, especially sequentially, in a series of discrete viewing steps or operations, at or over a respective selected one of a plurality of different angles of incidence or ranges of angles of incidence of the incoming light, such that each respective incident angle or angle range corresponds to and enables the viewing of a respective portion of the reconstructed image at or over a respective different viewing angle/angle range relative to the optical structure. In some such embodiment forms, the viewing of the complete reconstructed image may even be accomplished by illuminating the recorded or encoded image over a spread or extended range of angles or angle ranges of incidence of the incoming light, such that as the angle or angle range of incidence varies across that spread/extended range the complete reconstructed image is viewable in segments or stages or portions thereacross.

Thus, in the practising of certain ones of such embodiments, for viewing the complete reconstructed image a moveable light source may be used, which is to say a light source whose angle of incidence relative to the optical structure of the device is variable in at least one dimension, direction, axis or plane relative thereto. For this purpose such a light source may for example be a hand-held light source, so it may be manipulated by a user/viewer who wishes to view the overall reconstructed image for the said security, authentication or identification purpose. Alternatively the light source may be moveable mechanically.

In many practical embodiments of the invention, the optical structure of the device in which the holographic image is recorded may be, or may be contained within or on, a body of optically active material, which is to say, a material which is able to modify optical properties of incident light, such as its phase, amplitude, velocity or polarization, etc, which property modification may be effected upon reflection and/or transmission of the incident light. The body of optically active material may be of any suitable size, shape and configuration. In some embodiments for example, the body of optically active material may be substantially planar or in the form of a sheet or plate or film or layer of the relevant material, having the recorded or encoded image contained therein or thereon. However, in other embodiments the body of optically active material may be curved or arcuate or have at least one surface or face which is curved or arcuate. In other embodiments still, the body of optically active material may have substantial thickness such that the body takes the form of a block or cuboid. The optically active material of the body may be any suitable such material, as are conventionally used for the recording or encoding of holographic images using conventional holographic technology.

It may be a feature of some practical embodiments of the invention that the size, in at least one dimension, direction, axis or plane, of a or a respective given one of the viewable portion(s) of the reconstructed image may be greater than the corresponding size, in the same, or the respective same, dimension, direction, axis or plane, of a part of the optical structure having the corresponding or corresponding respective optically variable image portion recorded or encoded therein - or, put another way, the size, in at least one dimension, direction, axis or plane, of a given part of the optical structure having a or a respective one of the optically variable image portion(s) recorded or encoded therein may be smaller than the corresponding size, in the same, or the respective same, dimension, direction, axis or plane, of the or the respective viewable portion of the reconstructed image.

In such embodiments, the said at least one dimension, direction, axis or plane may be any such dimension, direction, axis or plane which allows for the or the respective recorded or encoded image portion of the structure and the or the respective reconstructed image portion to be different in size. In some such embodiments the at least one dimension, direction, axis or plane in which the aforementioned size difference is defined may be a dimension, direction, axis or plane contained within the body of the optical structure itself.

For example, in some such embodiment forms the size differential between the or the respective recorded or encoded image portion of the structure and the or the respective reconstructed image portion may be defined in either of a length or a width direction of and within a general plane of the optical structure.

In various such embodiments of the invention the size differential of the or the respective reconstructed image portion relative to the or the respective recorded or encoded image portion of the structure may be any multiple, including any whole number or fractional multiple, greater than 1. For example, the size of the or the respective reconstructed image portion may be any of >1 times, or 2 times, or ≥3 times, or ≥4 times, or ≥5 times, or ≥6 times, or ≥7 times, or ≥8 times, or ≥9 times, or ≥10 times, or perhaps even as much as ≥12 or ≥13 or ≥15 or ≥18 times or even ≥20 times, the size of the or the respective recorded image portion of the structure - i.e. that part, or portion or region, of the structure that contains or comprises the respective recorded or encoded image portion (any of which ranges include fractions as well as whole number multiples).

In some embodiment forms of the optical device of the invention, the optical structure in which the characteristic hologram or other recorded or encoded representation of the optically variable image is recorded or encoded may be, or may be comprised in a body of optically active material that is, of any shape, size and configuration. The part or parts of the optical structure in which the recorded or encoded image is so recorded or encoded may be or represent only a portion or region of the whole thereof, whereby the optical structure may have the recorded or encoded image so recorded or encoded in only a portion or region of the overall optical structure that is less than, optionally significantly less than, its whole - either in terms of its thickness and/or its facial area. Alternatively, however, in other embodiment forms, the optical structure may instead have the image recorded or encoded in or throughout substantially the whole of its volume (or thickness) and/or its facial area.

In some example forms the optical structure may be, or may be comprised in a body of optically active material that is, in the form of a strip or stripe, especially an elongate strip or stripe of relatively small thickness - e.g. in a thickness range of from about 0.1 or 0.5 or 1 or 5 or 10 up to about 100 or 200 or 300 or 400 or 500 or 800 or 1000 µm - with a facial width that is smaller than its length. Its width may be either generally substantially constant, or alternatively may be variable along the length of the strip or stripe. Such a strip or stripe may for example be generally straight or curved in configuration, and/or it may be formed by a combination of a plurality of variously shaped graphical regions or shapes or patterned regions or portions.

In some alternative embodiments however the optical structure may take other physical forms or shapes, for example it may be in the form of a circular, elliptical, polygonal (e.g. rectangular) or other regularly or irregularly shaped patch, land, region, portion, layer or body of the optically active material in which the holographic image is recorded or encoded. Nevertheless, when the optical structure takes such other physical forms or shapes it may likewise have a thickness in the range of from about 0.1 or 0.5 or 1 or 5 or 10 up to about 100 or 200 or 300 or 400 or 500 or 800 or 1000 µm. In some embodiments the hologram or other recorded or encoded representation of the optically variable image may be distributed across either substantially the whole of the width of the strip or stripe (or other shaped portion or region of the optical structure) and/or along at least a portion of its longitudinal length. Alternatively, however, the hologram or other recorded or encoded representation of the optically variable image may be distributed across only a portion of the width of the strip or stripe (or other shaped portion or region of the optical structure) and along a portion, or along at least a portion, of its longitudinal length.

In some embodiments of the invention the strip or stripe (or other shaped portion or region of the optical structure) containing the hologram or other recorded or encoded representation of the optically variable image may further comprise one or more additional or auxiliary security features, especially one or more further or auxiliary optical security features, such as may be already known *per se* in the art, and formed for example by appropriate optical elements or portions comprising modulations of the strip/stripe's surface, volume or internal optical properties. Such auxiliary optical security features may include for example any suitable form and number of overt or covert features, e.g. graphics, holograms, micro- or nano-graphics, diffractive or non-diffractive images and structures, hidden images, and suchlike.

In various such embodiments the hologram or other recorded or encoded representation of the optically variable image may share a given area or region or portion of the strip or stripe (or other shaped portion or region of the optical structure) with any such auxiliary optical security feature(s) contained therein in various ways, such as by the hologram or other recorded or encoded representation of the optically variable image occupying a portion of the strip or stripe (or other shaped portion or region of the optical structure) exclusively, or it may be interlaced with, or superimposed upon, or trapped or enshrouded beneath, one or more such auxiliary security feature(s).

In some such embodiments of the invention it may even be advantageous for a plurality of, even several, such auxiliary optical security features to be included in the strip or stripe (or other shaped portion or region of the optical structure) in order to make it more difficult for a casual observer or viewer to discern therein the presence of the characteristic recorded or encoded hologram that underpins this invention, especially when the image it records or encodes is reconstructed and an observer views it under conditions in which a significant proportion of the reconstructed image is not visible and/or its presence may not be suspected.

### BRIEF DESCRIPTION OF THE DRAWINGS

Some embodiments of the invention in its various aspects will now be described in detail, by way of example only, with reference to the accompanying drawings, in which:

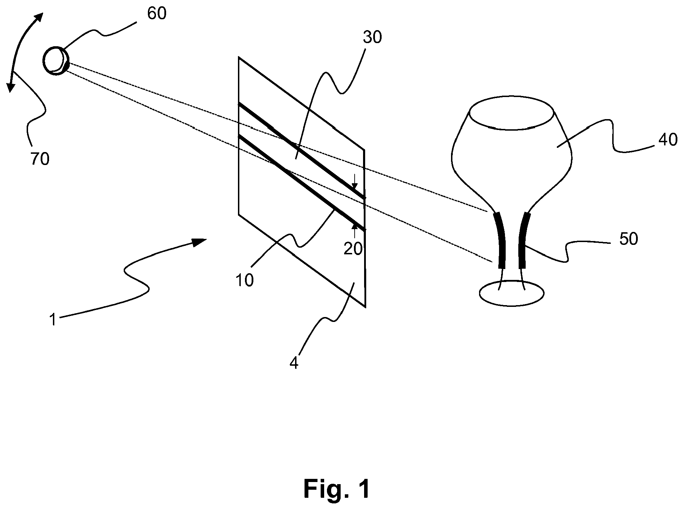

FIGURE 1 is a perspective schematic view of an optical arrangement or system incorporating an optical security device, which is actually outside the scope of the claimed invention, showing the general arrangement of the arrangement or system's main features and the manner in which one given portion of the security image is reconstructable and viewable;

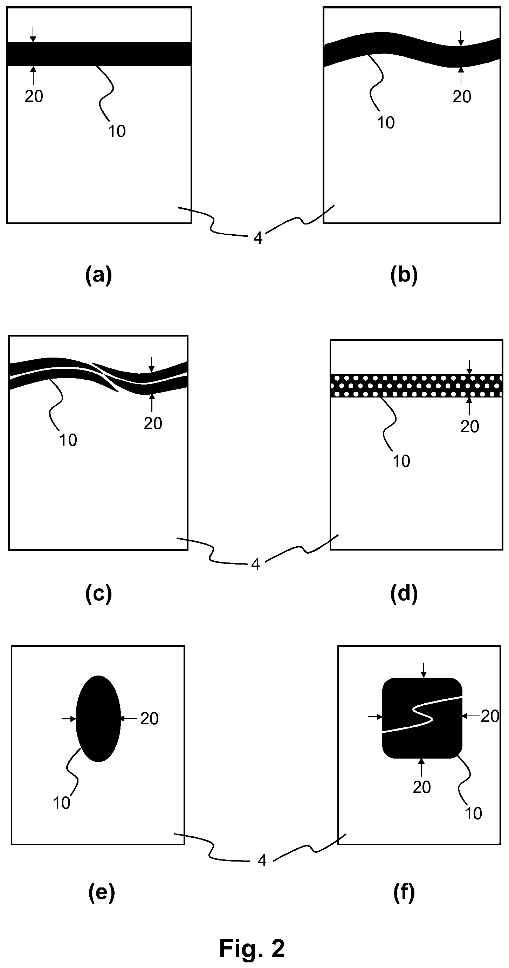

FIGURES 2(a), (b), (c), (d), (e) and (f) are face-on views of various schematic examples of other optical security features containing various different configurations of optical structure for incorporating recorded or encoded holographic security images for reconstruction and viewing, for use in optical security devices according to various embodiments of the invention;

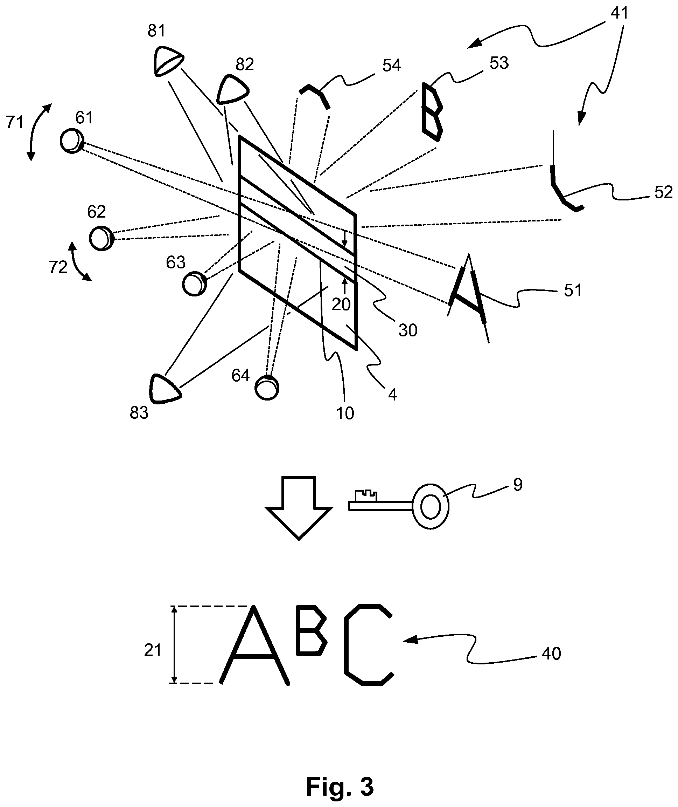

FIGURE 3 is a perspective schematic view of a more advanced optical arrangement or system incorporating an optical security device according to another embodiment of the invention, showing the general arrangement of the arrangement or system's main features and illustrating the manner in which a complete plural-component security image is reconstructable from its component portions, and viewable as the complete reconstructed image, by independent illumination and viewing of the recorded image at different respective illumination and viewing angles; and

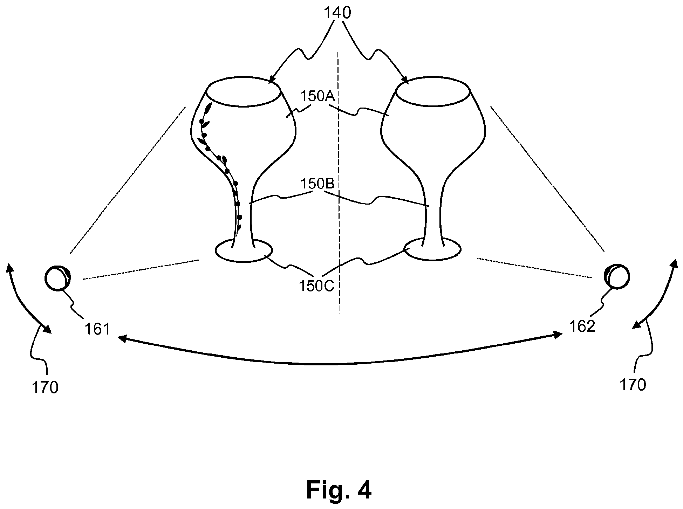

FIGURE 4 is a perspective schematic view of another optical arrangement or system embodying an example optical security device, which is actually outside the scope of the claimed invention, showing in general terms the manner in which different portions of a given three-dimensional image recorded/encoded in the device are reconstructed and viewed from different viewing angles.

### DETAILED DESCRIPTION OF EMBODIMENTS

Referring to FIG. 1, this shows a schematic representation of an optical system for reconstructing a holographic image recorded in an optical structure of a security device, in which the reconstructed image is significantly larger in size than the actual recorded image, i.e. that portion of the optical structure which has the recorded image recorded within it. This FIG. 1 is actually a "snapshot" representation of the optical structure and one portion only of the complete security image - namely the stem portion only of a complete wine glass - in the process of being reconstructed and viewed.

As shown in FIG. 1, a security device 1 comprises a generally planar body 4, e.g. a sheet or film or other relatively thin layer, of optically active material comprising a recorded or encoded optically variable image within an optical structure 30 contained in an area or region of the body 4 preferably elongated in one (i.e. a side-to-side longitudinal) direction, such as in the form of a stripe 10. The optical structure 30 contains an encoded holographic image recorded therein, which in this illustrative schematic example is a recorded or encoded representation of an image of a wine glass 40. Upon reconstruction of the image encoded in the structure 30 by incident light, the reconstructed image 40 appears to be floating in space out of (i.e. behind) the structure plane of the optical structure-containing stripe 10, and its characteristic size is several times larger than the optical structure-containing stripe 10 in which the optically variable holographic image is recorded, i.e. several times larger than that portion of the stripe 10 in which is recorded the optically variable holographic image, at least in the stripe 10's smaller width dimension 20. As a result, the reconstructed holographic image 40 can be viewed in its entirety only when an observer 60 changes its/their viewing angle 70 typically in the plane of the shorter dimension 20 of the optical structure-containing stripe 10.

By way of example, the width of the stripe 10 may be relatively narrow, such as of the order of approximately 1 to 3 mm, e.g. around ~1 mm, whereas the corresponding width, in the same dimension/direction, of the reconstructed image 40 may be relatively wide or tall, such as of the order of approximately 1 - 5 cm, e.g. around ~1 cm. This size differential thus enables only a minor proportion 50 of the reconstructed image 40 to be viewable by an observer 60 at any single given viewing position or angle (relative to the device's structure plane). Moreover the size of the reconstructed image 40 may be independent of the size of the hologram 30 itself. Furthermore, it may be noted that the size of the reconstructed image 40 may be independent of the distance between the observer 60 and the plane of the optical structure (stripe) 10, although the size (and/or extent, relative to the whole) of the visible portion 50 of the reconstructed image 40 may be dependent on that viewing distance.

Thus, and in accordance with embodiments of this invention, under normal viewing conditions by the observer 60 only a relatively small or partial portion - e.g. that represented by the portion 50, that being the stem of the wine glass - of the complete reconstructed image 40 (i.e. the complete wine glass) is viewable by the observer 60 at a single given viewing angle, as represented by the viewer 60's as-drawn current position shown in the drawing.

Thus, if the observer 60 wishes or needs to view other portions of the complete image 40 - i.e. other portions of the wine glass - then they need to do so at other respective different viewing angles (not shown in the drawing), whereby other parts of the wine glass, e.g. its bowl or its base, can only be viewed at such respective other viewing angles.

The characteristic feature of the invention that the reconstructed image needs to be larger (in a corresponding, or respective corresponding, direction, dimension, axis or plane) than the optical structure in which it is recorded or encoded, so that the observer is able to see only a relatively small or partial portion of the image (for example as described in the three preceding paragraphs), also implies that the designer of optical security devices embodying the present invention generally may need to take into consideration an intended or optimum viewing distance when designing the size of the reconstructed image and the size of the optical structure. At the intended or optimum viewing distance from the optical structure (as determined also by the designer), i.e. at the intended or optimum location of the observer, the angular size of the reconstructed image may need to be a multiple (e.g. an integer multiple greater than 1 or a fractional multiple (i.e. other than a whole number) greater than 1) of the angular size of the optical structure in the corresponding direction, dimension, axis or plane. (In general terms, by "angular size" is meant the angle under which an object is viewable or viewed at a specific distance from it.) For example, in many embodiments of the invention the angular size of the reconstructed image may be any of >1 times, or ≥2 times, or ≥3 times, or ≥4 times, or ≥5 times, or ≥6 times, or ≥7 times, or ≥8 times, or ≥9 times, or ≥10 times, or perhaps even as much as ≥12 or ≥13 or ≥15 or ≥18 times or even ≥20 times (which ranges include fractional multiples as well as whole number multiples), the angular size of the optical structure when viewed from the same location and/or viewing distance therefrom.

The basic stripe 10 may be formed as a standard security device as is often incorporated into printed documents or securities, such as banknotes, transportation tickets, event or other tickets, tax stamps, credit and debit cards, passports, visas, ID cards, or authentication features of branded (e.g. "luxury") goods. Such a stripe 10 may be straight, curved, or formed by a combination of various graphical shapes, or otherwise structured, while its width 20 is characteristically smaller than its longitudinal length. The width of the stripe 10 can be constant or variable along the length of the stripe 10. Alternatively, such a stripe in which the holographic image is recorded or encoded may instead take a different overall geometric form, such as a circular, elliptical, polygonal or other regularly or irregularly shaped patch, land, region or portion of the body 4 of the optically active material.

Some examples of such various configurations and arrangements of stripes or patches or lands 10 in which the hologram or other recorded or encoded representation of the optically variable image is contained are illustrated in FIGS. 2(a) - (f).

In addition to the characteristic holographic image 30 recorded or encoded in the optical structure of the stripe or patch or land 10, the stripe or patch or land 10 may further contain any number of, even a large number of, conventional auxiliary security features such as any suitable known overt or covert features, e.g. graphics, holograms, micro- or nano-graphics, diffractive or non-diffractive images and structures, hidden images, holograms, and suchlike. These features may be incorporated into the material of the stripe or patch or land 10 in a conventional manner, e.g. typically in a form of modulation of its surface, volume or optical properties. The presence of these auxiliary security features, at least one or more of which may for example be more readily visible to the naked eye than any portion of the reconstructed image of the characteristic recorded holographic image which characterises embodiments of this invention, may be useful in making it more difficult for a casual observer or viewer to discern the presence in the stripe or patch or land 10 of the characteristic recorded image recorded or encoded in the optical structure 30 central to this invention, especially when viewed under conditions in which a significant proportion of the reconstructed image 40 is not visible and/or its presence may not be suspected.

Thus, the hologram structure 30 contained in the stripe or patch or land 10 contains a recorded or encoded image which, when reconstructed, is located out of the hologram plane - which is to say, in front of or behind the general plane of the hologram structure 30 within the stripe, patch or land 10 (or the body 4), and at such a distance from that plane that only a minor portion 50 of the complete reconstructed image 40 in the direction of the stripe, patch or land width 20 can be viewed by an observer 60, as illustrated schematically in FIG. 1.

In practising some embodiments of the invention the observer 60 may be positioned relative to the hologram structure 30 at a suitable optimum distance therefrom to allow a correct viewing of the portion 50 of the reconstructed image 40, which distance may be termed a "standard observing distance". In some practical example embodiments that distance may be of the order of from around 10 or 15 to around 30 cm, e.g. around 25 cm. By moving the observer 60's position in a direction 70 generally parallel to the stripe width 20, the observer 60 can see different minor portions 50 etc of the overall image 40 and eventually - once the observer's viewing position has covered a sufficient distance - recognise the object the overall reconstructed holographic image 40 represents.

In further developed forms of some embodiments of the invention, the hologram structure 30 may be designed in such a way that under standard, everyday office or daylight lighting conditions the reconstructed holographic image 40, or any given portion thereof, is itself not clearly recognisable - for example it may be designed to be blurred or otherwise disguised, hidden or camouflaged under such conditions. However, at the same time it may be so designed that only once the hologram has been illuminated by a predetermined "correct" lighting condition, e.g. using a "point" light source - i.e. a source with a real or virtual emitting area significantly smaller (typically at least 10x) relative to the distance from illuminated object, or a source emitting collimated or quasi-collimated light - does the reconstructed image, or any given portion thereof, becomes recognizable, e.g. sharp or focused enough, to be recognisable. Such a "point" light source may be defined as one whose notional source is for most practical purposes able to be considered as being at infinity, i.e. one whose rays are generally approximately parallel to one another.

In practising such further developed embodiment forms of the invention it may be up to the hologram designer, i.e. the person skilled in the art, to determine the optimum observation conditions - e.g. white vs. monochromatic light, illumination angle, observation angle, "standard" (i.e. optimum) observation distance - and to choose an appropriate object (or objects) to be recorded or encoded into the structure 30, such as whether a 3-D object or a string of 2D characters or text, or even a combination of multiple such objects. The hologram structure 30 may also be designed such that it reveals different object images when illuminated or observed from different specific directions or with the use of monochromatic or quasi-monochromatic (i.e. of a narrow wavelength bandwidth, e.g. typically <20nm wide, or perhaps even as narrow as <1nm wide, as is the case with many lasers) light or a combination of plural light sources of different wavelengths (or frequencies).

Turning to FIG. 3, here there is shown a more advanced optical arrangement or system embodying the present invention, in which plural portions of a holographic image are observed at respective different predetermined configurations of the light source, viewer and optical structure. The FIG. 3 also illustrates the manner in which, in this example embodiment, in contrast with the simpler and more basic embodiment of FIG. 1, the portions of the reconstructed image may be combined into a complete final image using a predetermined key (e.g. an algorithm).

As shown in FIG. 3, a security device 1 comprises a planar body 4, e.g. a sheet or film or other relatively thin layer, of optically active material comprising an optically variable image-containing optical structure 30 contained in an area or region elongated in one direction, such as in the form of a stripe 10. The optical structure 30 contains an encoded holographic image recorded therein, which in this illustrative schematic example is an image of three letters "ABC" 40. This image cannot be viewed in a simple sequence of viewing steps, for example only by changing the viewing angle as shown in the embodiment of FIG. 2.

Instead, in this embodiment plural predetermined configurations of light sources 81, 82, 83 and of plural viewers 61, 62, 63, 64 in combination with respective viewer motions 71 and 72 and the hologram structure 30 have to be used to reconstruct respective plural portions of the holographic image 51, 52, 53, 54, which are respective portions of the three letters "ABC" 41.

In more detail, the first viewing step comprises using a light source 81 configured to illuminate structure 30 and to reconstruct the letter "A" and the top of the letter "C", a viewer 61 being positioned at a predetermined location so as to be able to view a portion of this letter 51, and using motion 71 (i.e. a predetermined continuous sequence of viewing steps) the viewer eventually views the entire letter.

The next viewing step comprises using the same configuration of the light source 81 (reconstructing the letter "A" and the top portion of the letter "C"), and the viewer 64 then is re-positioned to a different predetermined location so as to be able to view the top portion of the letter "C" 54 in its entirety.

The following viewing step comprises using light source 82 configured to illuminate structure 30 to reconstruct the letter "B", the viewer 63 now being re-positioned again to a different predetermined location so as to be able to view the whole letter "B" 53.

The last sequence of viewing steps comprises using light source 83 configured to illuminate structure 30 to reconstruct the central and bottom portions of the letter "C", the viewer 62 now being re-positioned to another predetermined location so as to be able to view a portion of the letter "C" 52, and using motion 72 (i.e. a predetermined continuous sequence of viewing steps) the viewer eventually views the entire central and bottom portions of the letter "C".

The complex nature of the viewing process (as described by way of example above) may require certain guidance. In fact, in the case of the described embodiment of the invention being used as a security feature, it is highly desirable that the sequence of viewing steps requires such a guidance, without which the sequence cannot be determined or guessed easily or not at all. The guidance may be provided by a designer in the form of a viewing algorithm comprising a predetermined sequence of viewing steps and viewing configurations (i.e. all necessarily predetermined viewing conditions). Performing the viewing steps according to such an algorithm will thus ensure that all the portions of the holographic image are viewed, and viewed correctly.

However, as can be also derived from FIG. 3, being able to view all portions of the holographic image may not be enough to recognise the entire object represented by these portions, since in the case of the described embodiment, these portions 41 are "dislocated" or "scrambled" when compared to the proper appearance of the final image 40. According to the viewing steps described above, the portions 41 are viewed in full - however, for the viewer they appear in locations which do not correspond to the locations of the respective portions in the final image 40. Therefore, a further key 9 - in addition to the viewing algorithm - is required in order to put viewed portions of the image into a proper order and/or positions and so to obtain the final representation of the complete recorded image. This additional operation may be done either by a mental process of a person performing the viewing, or by a viewing device in which such an operation is programmed, or by a combination of both. Again, the key 9 defining how to compose the viewed portions of the holographic image 51, 52, 53, 54 into the final complete reconstructed image 40 may be provided by the designer.

Not all algorithms are necessarily complex and/or an additional key 9 may not even be required - for example, as is the case illustrated in FIG. 1, where such an algorithm is very simple and effectively consists only of the steps of configuring a light source to reconstruct the image 40, and of a continuous sequence of viewing steps describing changing the position 70 of the viewer 60 in order to view all the portions 50 of the reconstructed image 40 so that the object represented by the image is recognised. However, the higher complexity of an embodiment of the invention, the higher level of security it may provide in security applications.

FIG. 4 illustrates schematically the viewing of different portions 150A, 150B, 150C (in this case the bowl, stem and base of a wine glass) of a given complete three-dimensional image 140 (in this case the complete wine glass) from different viewing angles. This complete image 140 may be considered to be the same complete image of a wine glass as recorded in the strip 20 shown in FIG. 1. The image 140 in this example is composed of three discrete portions: namely the bowl 150A, stem 150B and base 150C. In this example all three portions 150A, 150B, 150C are seamlessly connected. To view each portion 150A, 150B, 150C in full, plural viewing angles have to be applied when viewing each said portion: namely at least a range of viewing angles from left to right, corresponding to the illustrated viewing positions 161 and 162, and possibly in combination with a vertical range of viewing angles 170 (which correspond to those 70 as shown schematically in FIG. 1).

Taking the arrangement of FIG. 1 a developmental stage further, in an alternative example the image of the complete wine glass 140 could for instance be formed from six portions: i.e. left and right sides of the bowl, left and right sides of the stem, and left and right sides of the base. In such a case, a single viewing angle (from left or right) may be sufficient to view each discrete portion in full.

The above-described examples of security features thus represent a novel way to provide a covert security feature, yet one which is recognisable by an observer with little in the way of extraneous equipment. For example, in one practical scenario (as in the example of FIG. 1) the stepwise or stagewise viewing and recognition of the complete reconstructed image 40 may be accomplished by means of a simple illumination device such as, for example, a flashlight or a lighting app incorporated into a smartphone. It also enables the incorporation into a given narrow strip or stripe 10 a potentially significantly larger reconstructed image than has hitherto been possible or obvious to do (e.g. easily 5 to 10 times greater than the size of the hologram), thereby leading to improved levels of security or authentication capability through the forcing of the observer to go to greater lengths in viewing and identifying individual and relatively smaller (in comparison with the whole) portions of the overall complete reconstructed image 40.

Throughout the description and claims of this specification, the singular encompasses the plural unless expressly stated otherwise or the context otherwise requires. In particular, where the indefinite article is used, the specification is to be understood as contemplating plurality as well as singularity, unless expressly stated otherwise or the context requires otherwise.

## Claims

1. An optical security device (1) comprising a recorded or encoded representation of an optically variable image (40), the image being reconstructable and viewable for security, authentication or identification purposes, the device comprising:
an optical structure (30) in which there is recorded or encoded a representation of the optically variable image in the form of a plurality of portions of the complete image to be reconstructed,
**characterised in that:**
the respective said plurality of portions of the optically variable image can, when reconstructed, only be viewed in their totality by viewing the said image by each of (A) at or over a plurality of different viewing angles (70) or angle ranges relative to the optical structure, and (B) at or over a plurality of different angles or ranges of angles of illumination of the optical structure;
and wherein the size, in at least one dimension, direction, axis or plane, of the complete image, when reconstructed, is greater than the corresponding size (20), in the same, or the respective same, dimension, direction, axis or plane, of a part of the optical structure having the said plurality of portions of the image collectively recorded or encoded therein.

2. An optical security device according to claim 1, wherein the optical structure has recorded or encoded therein a representation of the optically variable image in the form of a plurality of portions of the complete image to be reconstructed,
wherein each respective one of some or all of the said plurality of portions of the optically variable image can, when reconstructed, only be viewed in full by viewing the said respective image portion by each of (C) at or over a respective range of viewing angles relative to the optical structure, and (D) at or over a respective range of angles of illumination of the optical structure

3. An optical security device according to claim 1, wherein the optical structure has recorded or encoded therein a representation of the optically variable image in the form of a plurality of discrete portions of the complete image to be reconstructed,
wherein each respective one of the said plurality of portions of the optically variable image can, when reconstructed, only be viewed by viewing the respective said image portion by each of (E) at or over a respective viewing angle or angle range relative to the optical structure, and (F) at or over a respective angle or angle range of illumination of the optical structure, which are, respectively, different from the (E) viewing angle/angle range an (F) angle/angle range of illumination at or over which at least one other of the said image portions is viewable when reconstructed.

4. An optical security device according to claim 1, wherein either:
(i) a respective (G) viewing angle/angle range and (H) angle/angle range of illumination at or over which a, or any, given one of the image portions can be viewed, when reconstructed, are, respectively, substantially the same (G) viewing angle/angle range and (H) angle/angle range of illumination at or over which at least one other of the said image portions, but not all of those other said image portions, (optionally or at least some of, but not all of, the remaining reconstructed image portions) is/are viewable when reconstructed; or
(ii) a respective (G) viewing angle/angle range and (H) angle/angle range of illumination at or over which a, or any, given one of the image portions can be viewed, when reconstructed, are, respectively, substantially different from the respective (G) viewing angle(s)/angle range(s) and (H) angle(s)/angle range(s) of illumination at or over which at least one other of the of the reconstructed image portions (optionally or at least some of the remaining reconstructed image portions) is/are viewable;
whereby, in either case (i) or (ii), in order for the complete reconstructed image to be viewable in its totality, such that all the portions of the complete reconstructed image are each respectively reconstructable and viewable, it is necessary for at least two different (G) viewing angles/angle ranges and at least two different -(H) angles/angle ranges of illumination to be employed to view all the reconstructed image portions.

5. An optical security device according to claim 1, wherein a respective (I) viewing angle/angle range and (J) angle/angle range of illumination at or over which a, or any, given one of the image portions can be viewed, when reconstructed, are, respectively, substantially different from the respective (I) viewing angles/angle ranges and (J) angles/angle ranges of illumination at or over which substantially all the other reconstructed image portions are viewable;
whereby in order for the complete reconstructed image to be viewable in its totality, such that all the portions of the complete reconstructed image are each respectively reconstructable and viewable, it is necessary for a plurality of different (I) viewing angles/angle ranges and a plurality of different (J) angles/angle ranges of illumination to be employed to view respective ones of the plurality of reconstructed image portions;
optionally wherein each respective (I) viewing angle/angle range and (J) angle/angle range of illumination at or over which a respective reconstructed image portion is viewable are unique to that respective reconstructed image portion.

6. An optical security device according to any preceding claim, wherein either:
(i) the size, in at least one dimension, direction, axis or plane, of one or more given ones of the viewable portions of the reconstructed image is greater than the corresponding size, in the same, or the respective same, dimension, direction, axis or plane, of a part of the optical structure having the said one or more given optically variable image portion(s) recorded or encoded therein; or
(ii) the size, in at least one dimension, direction, axis or plane, of a given part of the optical structure having one or more given ones of the optically variable image portion(s) recorded or encoded therein is smaller than the corresponding size, in the same, or the respective same, dimension, direction, axis or plane, of the said one or more respective viewable portion(s) of the reconstructed image;
optionally wherein the size differential of the or the respective reconstructed image portion relative to the or the respective recorded or encoded image portion of the structure is such that the respective reconstructed image portion is any of: >1 times, or 2 times, or ≥3 times, or ≥4 times, or ≥5 times, or ≥6 times, or ≥7 times, or ≥8 times, or ≥9 times, or ≥10 times, or ≥12 times or ≥13 times or ≥15 times or ≥18 times or ≥20 times, the size of the respective recorded image portion of the structure (wherein any of said ranges include fractions as well as whole number multiples).

7. An optical security device according to any preceding claim, wherein the angular size of the reconstructed image is >1 times, optionally ≥2 or ≥3 times, further optionally ≥10 times, yet further optionally ≥15 or ≥20 times (which ranges include fractional multiples as well as whole number multiples) the angular size of the optical structure when viewed from a given viewing distance and/or location therefrom.

8. An optical security device according to any preceding claim, wherein one of the following (i), (ii) or (iii) is present or satisfied:
(i) the recorded or encoded representation of the optically variable image is a hologram; or
(ii) the recorded or encoded representation of the optically variable image is a two-dimensional (2-D) or a three-dimensional (3-D) hologram, and the optically variable image is an image of one or more 2-D or 3-D objects, pictures, patterns, one or more alphanumeric or other typographical characters, or any combination of any two or more of any of the foregoing things; or
(iii) the optical structure having the portion(s) of the optically variable image recorded or encoded therein is or comprises a DOVID (diffractive optically variable image device).

9. An optical security device according to any preceding claim, wherein the optical structure defines a structure plane, optionally a plane which is contained within the thickness of the optical structure and/or which is non-parallel to light incident on the optical structure during the reconstruction of the recorded or encoded image, and the reconstructed image lies wholly or at least partially to one side of, optionally or to each of both sides of, the said structure plane;
optionally wherein the reconstructed image lies out of the structure plane on the side thereof opposite to that from which the illuminating light is incident thereon.

10. An optical security device according to any preceding claim, wherein either:
(i) the device takes the form of a security feature which has already been applied to or incorporated into the structure of an item or object whose security, authentication or identification is required; or
(ii) the device is provided in the form of a discrete security device or security element for application, affixation or incorporation into the structure of an item or object whose security, authentication or identification is required.

11. An optical security device according to any preceding claim, wherein the optical structure in which is recorded or encoded the representation of the optically variable image is, or is contained within or on, a body of optically active material,
wherein the body of optically active material comprises a sheet or plate or film or layer of the optically active material with a thickness range of from 0.1 or 0.5 or 1 or 5 or 10 up to 100 or 200 or 300 or 400 or 500 or 800 or 1000 µm;
optionally wherein a portion of the body of optically active material in which is recorded or encoded the representation of the optically variable image further comprises one or more additional or auxiliary overt or covert security features formed by modulations of the surface, volume or internal optical properties of the said body portion and comprising one or more graphics, holograms, micro- or nano-graphics, diffractive or non-diffractive images and structures, or hidden images.

12. A method for the production of an optical security device as defined in any one of claims 1 to 11, the method comprising:
recording or encoding in an optical structure a recorded or encoded representation of the optically variable image in the form of a plurality of portions of the complete image to be reconstructed,
wherein the respective said plurality of portions of the optically variable image can, when reconstructed, only be viewed in their totality by viewing the said image by each of (A) at or over a plurality of different viewing angles or angle ranges relative to the optical structure, and (B) at or over a plurality of different angles or ranges of angles of illumination of the optical structure,
and wherein the size, in at least one dimension, direction, axis or plane, of the complete image, when reconstructed, is greater than the corresponding size, in the same, or the respective same, dimension, direction, axis or plane, of a part of the optical structure having the said plurality of portions of the image collectively recorded or encoded therein;
optionally wherein:
(i) the method comprises forming the optical structure, having the said plurality of portions of the record or encoded representation of the complete optically variable image recorded or encoded therein, as an optical security feature, and either simultaneously or subsequently to that recording or encoding incorporating the said optical security feature into an item or object whose security, authentication or identification is required; or
(ii) the method comprises forming the optical structure, having the said plurality of portions of the record or encoded representation of the complete optically variable image recorded or encoded therein, as a discrete optical security device or security element, and the method further comprises a step of applying, affixing or incorporating the optical security device or element onto or into the structure of an item or object whose security, authentication or identification is required.

13. A method of authenticating or identifying an item or object having applied or affixed thereto or incorporated into the structure thereof an optical security device as defined in any one of claims 1 to 11, the method comprising:
(a) reconstructing the said plurality of portions of the complete optically variable image recorded or encoded in the optical structure of the device; and
(b) viewing one or more of the said plurality of reconstructed portions of the complete image;
optionally wherein the recorded or encoded optically variable image, or respective portions thereof, is reconstructed by illumination of the optical structure, or a respective part or portion or region thereof, by electromagnetic radiation, the electromagnetic radiation being of a wavelength/frequency appropriate to the means used to record/encode and/or intended for reconstructing the image, optionally wherein the electromagnetic radiation comprises visible light.

14. A method according to claim 13, wherein the optical security device is an optical security device in which:
the optical structure has recorded or encoded therein a representation of the optically variable image in the form of a plurality of discrete portions of the complete image to be reconstructed, and:
(i) each respective one of the said plurality of portions of the optically variable image can, when reconstructed, only be viewed by viewing the respective said image portion by each of (E) at or over a respective viewing angle or angle range relative to the optical structure, and (F) at or over a respective angle or angle range of illumination of the optical structure, which are, respectively, different from the (E) viewing angle/angle range and (F) angle/angle range of illumination at or over which at least one other of the said image portions is viewable when reconstructed; or
(ii) the respective (G) viewing angle/angle range and (H) angle/angle range of illumination at or over which a, or any, given one of the image portions can be viewed, when reconstructed, are, respectively, substantially the same (G) viewing angle/angle range and (H) angle/angle range of illumination at or over which at least one other of the said image portions, but not all of those other said image portions, (optionally or at least some of, but not all of, the remaining reconstructed image portions) is/are viewable when reconstructed; or
(iii) the respective (I) viewing angle/angle range and (J) angle/angle range of illumination at or over which a, or any, given one of the image portions can be viewed, when reconstructed, are, respectively, substantially different from the respective (I) viewing angle(s)/angle range(s) and (J) angle(s)/angle range(s) of illumination at or over which at least one other of the of the reconstructed image portions (optionally or at least some of the remaining reconstructed image portions) is/are viewable;
wherein the viewing step (b) comprises:
(bi) viewing the or each respective one of the plurality of reconstructed portions of the complete optically variable image by (K) at or over, or only at or over, the or the respective viewing angle or angle range relative to the optical structure, and by (L) illuminating the optical structure at or over the respective angle or angle range of illumination, that are associated with that respective reconstructed image portion of the complete image; and/or
(bii) viewing respective ones of the plurality of reconstructed portions of the complete optically variable image at or over, or only at or over, respective ones of the plurality of different (A) viewing angles/angle ranges and (B) angles/angle ranges of illumination of the optical structure;
whereby the complete reconstructed optically variable image is viewable in its totality, such that all the portions of the complete reconstructed image are each respectively reconstructable and viewable, by, or only by:
(ci) viewing the or each respective portion thereof at or over, or only at or over, the or the respective (K) viewing angle/angle range and (L) angle/angle range of illumination of the optical structure that is associated with that respective image portion, and/or
(cii) viewing respective ones of the plurality of reconstructed portions thereof at or over, or only at or over, the respective ones of the plurality of different (A) viewing angles/angle ranges and (B) angles/angle ranges of illumination of the optical structure,
as the case may be.

15. A method according to claim 13 or claim 14, wherein the viewing step (b) either:
(i) is carried out by:
(ia) visual viewing of at least a or a respective portion of the image by one or more eyes of a human observer, or
(ib) detecting at least a or a respective portion of the image using an optically sensitive device, optionally in combination with suitable image processing hardware and/or software; or
(ii) comprises:
viewing a first one of the plurality of portions of the reconstructed image by means of a first viewing step or operation in which just the first portion only of the reconstructed image is viewed; and optionally
one or more additional or further viewing steps or operations in each of which a respective additional or further one of the plurality of portions of the reconstructed image is viewed;
and further optionally wherein in each of the said viewing steps or operations the viewing of each respective portion of the reconstructed image is carried out by (K) viewing each respective portion of the image at or over a given, or at or over a unique, viewing angle or angle range relative to the optical structure, and (L) by illuminating the optical structure at or over a given, or at or over a unique, angle or angle range of illumination that is associated with that respective image portion;
or (iii) both (i) and (ii) above are present or satisfied.

16. A method according to any one of claims 13 to 15, wherein the overall complete reconstructed image is of such a size, greater than that of the parts of the optical structure in which are recorded or encoded the various portions of the image, that it is only viewable in its entirety upon a plurality of individual or discrete viewing steps or operations being carried out, each such viewing step or operation being such as to view a respective portion only, optionally a respective discrete portion only, of the complete reconstructed image, and further optionally a respective discrete portion only of the complete reconstructed image independently of the viewing of any of the other portion(s) of the complete reconstructed image.

17. A method according to any one of claims 13 to 16, wherein:
plural portions of the complete reconstructed image are viewable independently of each other, and
wherein the viewing of the complete reconstructed image is accomplished by illuminating corresponding respective portions of the recorded or encoded image in a plurality of discrete illumination steps or operations, wherein the viewing of the complete reconstructed image is accomplished by illuminating the recorded or encoded image sequentially in a series of discrete viewing steps or operations, each at or over a respective selected one of a plurality of different angles of incidence or ranges of angles of incidence of the incoming light, such that each respective incident angle or angle range corresponds to and enables the viewing of a respective portion of the reconstructed image at or over a respective different viewing angle/angle range relative to the optical structure.

## Patentansprüche

1. Optische Sicherheitsvorrichtung (1), umfassend eine aufgezeichnete oder codierte Darstellung eines optisch variablen Bildes (40), wobei das Bild rekonstruierbar ist und für Sicherheits-, Authentifizierungs- oder Identifikationszwecke sichtbar ist, wobei die Vorrichtung umfasst:
eine optische Struktur (30), in der eine Darstellung des optisch variablen Bildes in Form einer Vielzahl von Abschnitten des zu rekonstruierenden vollständigen Bildes aufgezeichnet oder codiert wird,
**dadurch gekennzeichnet, dass:**
die jeweilige Vielzahl von Abschnitten des optisch variablen Bildes, wenn es rekonstruiert wird, nur in ihrer Gesamtheit durch Betrachten des Bildes von jedem der (A) in oder über eine Vielzahl unterschiedlicher Betrachtungswinkel (70) oder Winkelbereiche relativ zu der optischen Struktur, und (B) in oder über eine Vielzahl unterschiedlicher Winkel oder Winkelbereiche der Beleuchtung der optischen Struktur betrachtet werden können;
und wobei die Größe, in mindestens einer Dimension, Richtung, Achse oder Ebene des vollständigen Bildes, wenn es rekonstruiert wird, größer ist als die entsprechende Größe (20), in der gleichen oder der jeweiligen gleichen Dimension, Richtung, Achse oder Ebene eines Teils der optischen Struktur, welche die Vielzahl von Abschnitten des Bildes aufweist, die zusammen darin aufgezeichnet oder codiert wird.

2. Optische Sicherheitsvorrichtung nach Anspruch 1, wobei die optische Struktur darin eine Darstellung des optisch variablen Bildes in Form einer Vielzahl von Abschnitten des vollständigen zu rekonstruierenden Bildes aufgezeichnet oder codiert hat,
wobei jeder jeweilige eine von einigen oder allen der Vielzahl von Abschnitten des optisch variablen Bildes, wenn es rekonstruiert wird, nur vollständig betrachtet werden kann, indem der jeweilige Bildabschnitt von jedem der (C) in oder über einen jeweiligen Betrachtungswinkelbereich relativ zu der optischen Struktur, und (D) in oder über einen jeweiligen Beleuchtungswinkelbereich der optischen Struktur betrachtet wird.

3. Optische Sicherheitsvorrichtung nach Anspruch 1, wobei die optische Struktur darin eine Darstellung des optisch variablen Bildes in Form einer Vielzahl von diskreten Abschnitten des vollständigen zu rekonstruierenden Bildes aufgezeichnet oder codiert hat,
wobei jeder jeweilige eine der Vielzahl von Abschnitten des optisch variablen Bildes, wenn es rekonstruiert wird, nur durch Betrachten des jeweiligen Bildabschnitts von jedem der (E) in oder über einen jeweiligen Betrachtungswinkel oder -winkelbereich relativ zu der optischen Struktur, und (F) in oder über einen jeweiligen Beleuchtungswinkel oder -winkelbereich der optischen Struktur betrachtet werden kann, die sich jeweils von dem (E) Betrachtungswinkel/- winkelbereich und (F) Beleuchtungswinkel/-winkelbereich unterscheiden, in oder über den mindestens ein anderer der Bildabschnitte, wenn er rekonstruiert wird, sichtbar ist.

4. Optische Sicherheitsvorrichtung nach Anspruch 1, wobei entweder:
(i) ein jeweilige (G) Betrachtungswinkel/-winkelbereich und (H) Beleuchtungswinkel/-winkelbereich in oder über den einen, oder beliebige, gegebene der Bildabschnitte betrachtet werden können, wenn diese rekonstruiert werden, sich jeweils im Wesentlichen der gleiche (G) Betrachtungswinkel/- winkelbereich und (H) Beleuchtungswinkel/-winkelbereich in oder über mindestens einen anderen der Bildabschnitte sind, aber nicht allen dieser anderen Bildabschnitte (optional oder mindestens einige von, aber nicht alle, der verbleibenden rekonstruierten Bildabschnitte) sichtbar ist/sind, wenn sie rekonstruiert werden; oder
(ii) ein jeweilige (G) Betrachtungswinkel/-winkelbereich und (H) Beleuchtungswinkel/-winkelbereich in oder über den ein oder ein beliebiger gegebener der Bildabschnitte betrachtet werden kann, wenn er rekonstruiert wird, sich jeweils im Wesentlichen von dem/den jeweiligen (G) Betrachtungswinkel(n)/- winkelbereich(en) und (H) Beleuchtungswinkel(n)/-winkelbereich(en) unterscheiden, in oder über den mindestens einen anderen der rekonstruierten Bildabschnitte (optional oder mindestens einige der verbleibenden rekonstruierten Bildabschnitte) sichtbar ist/sind;
wobei in beiden Fällen (i) oder (ii), damit das vollständige rekonstruierte Bild in seiner Gesamtheit sichtbar ist, sodass alle Abschnitte des vollständigen rekonstruierten Bildes jeweils rekonstruierbar und sichtbar sind, es erforderlich ist, dass mindestens zwei unterschiedliche (G) Betrachtungswinkel/-winkelbereiche und mindestens zwei unterschiedliche (H) Beleuchtungswinkel/-winkelbereiche eingesetzt werden, um alle rekonstruierten Bildabschnitte zu betrachten.

5. Optische Sicherheitsvorrichtung nach Anspruch 1, wobei ein jeweilige (I) Betrachtungswinkel/-winkelbereich und (J) Beleuchtungswinkel/-winkelbereich in oder über den einer oder ein beliebiger gegebener der Bildabschnitte, wenn sie rekonstruiert werden, betrachtet werden kann, sich jeweils im Wesentlichen von den jeweiligen (I) Betrachtungswinkeln/-winkelbereichen und (J) Beleuchtungswinkeln/-winkelbereichen, in oder über denen im Wesentlichen alle anderen rekonstruierten Bildabschnitte sichtbar sind, unterscheiden;
wobei, damit das vollständige rekonstruierte Bild in seiner Gesamtheit sichtbar ist, sodass alle der Abschnitte des vollständigen rekonstruierten Bildes jeweils rekonstruierbar und sichtbar sind, es erforderlich ist, dass eine Vielzahl unterschiedlicher (I) Betrachtungswinkel/-winkelbereiche und eine Vielzahl unterschiedlicher (J) Beleuchtungswinkel/-winkelbereiche eingesetzt wird, um jeweilige der Vielzahl rekonstruierter Bildabschnitte zu betrachten;
optional wobei jeder jeweilige (I) Betrachtungswinkel/-winkelbereich und (J) Beleuchtungswinkel/-winkelbereich in oder über den ein jeweiliger rekonstruierter Bildabschnitt sichtbar ist, für diesen jeweiligen rekonstruierten Bildabschnitt einzigartig sind.

6. Optische Sicherheitsvorrichtung nach einem der vorstehenden Ansprüche, wobei entweder:
(i) die Größe, in mindestens einer Dimension, Richtung, Achse oder Ebene von einem oder mehreren gegebenen der sichtbaren Abschnitte des rekonstruierten Bildes größer ist als die entsprechende Größe, in der gleichen oder der jeweiligen gleichen Dimension, Richtung, Achse oder Ebene eines Teils der optischen Struktur, die den einen oder die mehreren gegebenen optisch variablen Bildabschnitte aufweist, darin aufgezeichnet oder codiert hat; oder
(ii) die Größe, in mindestens einer Dimension, Richtung, Achse oder Ebene eines gegebenen Teils der optischen Struktur mit einem oder mehreren gegebenen des/der darin aufgezeichneten oder codierten optisch variablen Bildabschnitts/Bildabschnitte kleiner ist als die entsprechende Größe, in der gleichen oder der jeweiligen gleichen Dimension, Richtung, Achse oder Ebene des einen oder der mehreren jeweiligen sichtbaren Abschnitte des rekonstruierten Bildes;
optional wobei das Größendifferential des oder des jeweiligen rekonstruierten Bildabschnitts relativ zu dem oder dem jeweiligen aufgezeichneten oder codierten Bildabschnitt der Struktur derart ist, dass der jeweilige rekonstruierte Bildabschnitt ein beliebiger von Folgenden ist: >1-fache, oder 2-fache, oder ≥ 3-fache oder ≥ 4-fache oder ≥ 5-fache oder ≥ 6-fache oder ≥ 7-fache oder ≥ 8-fache oder ≥ 9-fache oder ≥ 10-fache oder ≥ 12-fache oder ≥ 13-fache oder ≥ 15-fache oder ≥ 18-fache oder ≥ 20-fache der Größe des jeweiligen aufgezeichneten Bildabschnitts der Struktur (wobei jeder der Bereiche Anteile sowie ganzzahlige Vielfache einschließt).

7. Optische Sicherheitsvorrichtung nach einem der vorstehenden Ansprüche, wobei die Winkelgröße des rekonstruierten Bildes >1-fache, optional ≥ 2 oder ≥ 3-fache, weiter optional ≥ 10-fache, noch weiter optional ≥ 15 oder ≥ 20-fache (wobei die Bereiche fraktionierte Vielfache sowie ganzzahlige Vielfache einschließen) die Winkelgröße der optischen Struktur bei Betrachtung von einem gegebenen Betrachtungsabstand und/oder Standort davon ist.

8. Optische Sicherheitsvorrichtung nach einem der vorstehenden Ansprüche, wobei eines von folgenden (i), (ii) oder (iii) vorhanden oder erfüllt ist:
(i) die aufgenommene oder codierte Darstellung des optisch variablen Bildes ist ein Hologramm; oder
(ii) die aufgezeichnete oder codierte Darstellung des optisch variablen Bildes ist ein zweidimensionales (2-D) oder ein dreidimensionales (3-D-) Hologramm, und das optisch variable Bild ist ein Bild von einem oder mehreren 2-D- oder 3-D-Objekten, Bildern, Mustern, einem oder mehreren alphanumerischen oder anderen typographischen Zeichen oder eine beliebigen Kombination von zwei oder mehr der vorstehenden Dinge; oder
(iii) die optische Struktur, die den/die darin aufgezeichneten oder codierten Abschnitt(e) des optisch variablen Bildes aufweist, ein DOVID (beugungsoptisch variable Bildvorrichtung) umfasst.

9. Optische Sicherheitsvorrichtung nach einem der vorstehenden Ansprüche, wobei die optische Struktur eine Strukturebene definiert, optional eine Ebene, die in der Dicke der optischen Struktur enthalten ist und/oder die nicht parallel zu Licht ist, das während der Rekonstruktion des aufgezeichneten oder codierten Bildes auf die optische Struktur trifft, und das rekonstruierte Bild vollständig oder mindestens teilweise zu einer Seite von, optional, oder zu jeder von beiden Seiten der besagten Strukturebene liegt;
optional wobei das rekonstruierte Bild aus der Strukturebene auf der Seite davon gegenüber derjenigen liegt, von dem das Beleuchtungslicht darauf auftrifft.

10. Optische Sicherheitsvorrichtung nach einem der vorstehenden Ansprüche, wobei entweder:
(i) die Vorrichtung die Form eines Sicherheitsmerkmals annimmt, das bereits auf die Struktur eines Objekts oder Objekts angewendet wurde oder in dieses integriert wurde, dessen Sicherheit, Authentifizierung oder Identifikation erforderlich ist; oder
(ii) die Vorrichtung in Form einer diskreten Sicherheitsvorrichtung oder eines Sicherheitselements zur Anwendung, Fixierung oder Integration in die Struktur eines Elements oder Objekts bereitgestellt ist, dessen Sicherheit, Authentifizierung oder Identifikation erforderlich ist.

11. Optische Sicherheitsvorrichtung nach einem der vorstehenden Ansprüche, wobei die optische Struktur, in der die Darstellung des optisch variablen Bildes aufgezeichnet oder codiert ist, einen Körper aus optisch aktivem Material ist oder in diesem enthalten ist,
wobei der Körper aus optisch aktivem Material ein Blatt oder eine Platte oder eine Folie oder Schicht des optisch aktiven Materials mit einem Dickenbereich von 0,1 oder 0,5 oder 1 oder 5 oder 10 bis zu 100 oder 200 oder 300 oder 400 oder 500 oder 800 oder 1000 µm umfasst;
optional wobei ein Abschnitt des Körpers aus optisch aktivem Material, in dem die Darstellung des optisch variablen Bildes aufgezeichnet oder codiert wird, ferner eines oder mehrere offene oder verdeckte zusätzliche oder Hilfssicherheitsmerkmale umfasst, die durch Modulationen der Oberfläche, Volumen- oder interne optische Eigenschaften des Körperabschnitts gebildet werden und eine oder mehrere Grafiken, Hologramme, Mikro- oder Nanografik, Beugungs- oder Nichtbeugungsbilder und -strukturen oder verborgene Bilder umfassen.

12. Verfahren zur Herstellung einer optischen Sicherheitsvorrichtung wie nach einem der Ansprüche 1 bis 11 definiert, wobei das Verfahren umfasst:
Aufzeichnen oder Codieren, in einer optischen Struktur, einer aufgezeichneten oder codierten Darstellung des optisch variablen Bildes in Form einer Vielzahl von Abschnitten des vollständigen zu rekonstruierenden Bildes,
wobei die jeweilige Vielzahl von Abschnitten des optisch variablen Bildes, wenn sie rekonstruiert werden, nur in ihrer Gesamtheit durch Betrachten des Bildes von jedem der (A) in oder über eine Vielzahl unterschiedlicher Betrachtungswinkel oder -winkelbereiche relativ zu der optischen Struktur, und (B) in oder über einer Vielzahl unterschiedlicher Betrachtungswinkel oder -winkelbereiche der optischen Struktur betrachtet werden können,
und wobei die Größe, in mindestens einer Dimension, Richtung, Achse oder Ebene des vollständigen Bildes, wenn es rekonstruiert wird, größer ist als die entsprechende Größe, in der gleichen oder der jeweiligen gleichen Dimension, Richtung, Achse oder Ebene eines Teils der optischen Struktur, welche die Vielzahl von Abschnitten des Bildes aufweist, die zusammen darin aufgezeichnet oder codiert wird;
optional wobei:
(i) das Verfahren das Bilden der optischen Struktur, welche die Vielzahl von Abschnitten der aufgezeichneten oder codierten Darstellung des darin aufgezeichneten oder codierten vollständigen optisch variablen Bildes aufweist, als ein optisches Sicherheitsmerkmal und entweder gleichzeitig oder anschließend zu der Aufzeichnung oder Codierung das optische Sicherheitsmerkmal in ein Element oder ein Objekt integriert wird, dessen Sicherheit, Authentifizierung oder Identifikation erforderlich ist; oder
(ii) das Verfahren das Bilden der optischen Struktur mit der Vielzahl von Abschnitten der aufgezeichneten oder codierten Darstellung des darin aufgezeichneten oder codierten vollständigen optisch variablen Bildes als eine diskrete optische Sicherheitsvorrichtung oder Sicherheitsmerkmal umfasst und das Verfahren ferner einen Schritt des Aufbringens, Fixierens oder Integrierens der optischen Sicherheitsvorrichtung oder des Elements auf oder in die Struktur eines Elements oder Objekts umfasst, dessen Sicherheit, Authentifizierung oder Identifikation erforderlich ist.

13. Verfahren zum Authentifizieren oder Identifizieren eines Elements oder eines Objekts, auf dessen Struktur eine optische Sicherheitsvorrichtung aufgebracht oder daran befestigt oder darin integriert ist, wie sie in einem der Ansprüche 1 bis 11 definiert ist, wobei das Verfahren umfasst:
(a) Rekonstruieren der Vielzahl von Abschnitten des vollständigen optisch variablen Bildes, das in der optischen Struktur der Vorrichtung aufgezeichnet oder codiert ist; und
(b) Anzeigen eines oder mehrerer der Vielzahl von rekonstruierten Abschnitten des vollständigen Bildes;
optional wobei das aufgezeichnete oder codierte optisch variable Bild oder jeweilige Abschnitte davon durch Beleuchtung der optischen Struktur oder eines jeweiligen Teils oder Abschnitts oder Gebiets davon durch elektromagnetische Strahlung rekonstruiert wird, wobei die elektromagnetische Strahlung von einer Wellenlänge/Frequenz stammt, die für die Mittel geeignet ist, die zum Aufzeichnen/Codieren und/oder zum Rekonstruieren des Bildes geeignet sind, optional wobei die elektromagnetische Strahlung sichtbares Licht umfasst.

14. Verfahren nach Anspruch 13, wobei die optische Sicherheitsvorrichtung eine optische Sicherheitsvorrichtung ist, in der:
die optische Struktur darin eine Darstellung des optisch variablen Bildes in Form einer Vielzahl von diskreten Abschnitten des vollständigen zu rekonstruierenden Bildes aufgezeichnet oder codiert hat, und:
(i) jeder jeweilige der Vielzahl von Abschnitten des optisch variablen Bildes, beim Rekonstruieren, nur durch Betrachten des jeweiligen Bildabschnitts von jedem der (E) an oder über einem jeweiligen Betrachtungswinkel oder Winkelbereich relativ zu der optischen Struktur, und (F) an oder über einem jeweiligen Winkel oder Winkelbereich der Beleuchtung der optischen Struktur betrachtet werden kann, die sich von dem (E) Betrachtungswinkel/Winkelbereich und (F) Winkel/Winkelbereichs der Beleuchtung unterscheiden, an oder über dem mindestens ein anderer der Bildabschnitte beim Rekonstruieren betrachtet werden kann; oder
(ii) der jeweilige (G) Betrachtungswinkel/-winkelbereich und (H) Beleuchtungswinkel/-winkelbereich in oder über den einen, oder beliebige, gegebene der Bildabschnitte betrachtet werden können, wenn diese rekonstruiert werden, sich jeweils im Wesentlichen der gleiche (G) Betrachtungswinkel/- winkelbereich und (H) Beleuchtungswinkel/-winkelbereich in oder über mindestens einen anderen der Bildabschnitte sind, aber nicht allen dieser anderen Bildabschnitte (optional oder mindestens einige von, aber nicht alle, der verbleibenden rekonstruierten Bildabschnitte) sichtbar ist/sind, wenn sie rekonstruiert werden; oder
(iii) der jeweilige (I) Betrachtungswinkel/-winkelbereich und (J) Beleuchtungswinkel/-winkelbereich in oder über den ein oder ein beliebiger gegebener der Bildabschnitte betrachtet werden kann, wenn er rekonstruiert wird, sich jeweils im Wesentlichen von dem/den jeweiligen (I) Betrachtungswinkel(n)/- winkelbereich(en) und (J) Beleuchtungswinkel(n)/-winkelbereich(en) in oder über den mindestens einen anderen der rekonstruierten Bildabschnitte (optional oder mindestens einige der verbleibenden rekonstruierten Bildabschnitte) sichtbar ist/sind, unterscheiden;
wobei der Betrachtungsschritt (b) umfasst:
(bi) Betrachten des oder jedes jeweiligen der Vielzahl von rekonstruierten Abschnitten des vollständigen optisch variablen Bildes durch (K) in oder über, oder nur in oder über, den oder den jeweiligen Betrachtungswinkel oder -winkelbereich relativ zu der optischen Struktur, und durch (L) Beleuchten der optischen Struktur in oder über den jeweiligen Beleuchtungswinkel oder -winkelbereich, der dem jeweiligen rekonstruierten Bildabschnitt des vollständigen Bildes zugeordnet sind; und/oder
(bii) Betrachten jeweiliger der Vielzahl von rekonstruierten Abschnitten des vollständigen optisch variablen Bildes in oder über, oder nur in oder über, jeweilige der Vielzahl von unterschiedlichen (A) Betrachtungswinkel/- winkelbereichen und (B) Beleuchtungswinkel/-winkelbereichen der optischen Struktur;
wobei das vollständige rekonstruierte optisch variable Bild in seiner Gesamtheit sichtbar ist, sodass alle Abschnitte des vollständigen rekonstruierten Bildes jeweils rekonstruierbar und sichtbar sind durch, oder nur durch:
(ci) Betrachten des oder jedes jeweiligen Abschnitts davon in oder über, oder nur in oder über, den oder den jeweiligen (K) Betrachtungswinkel/- winkelbereich und (L) Beleuchtungswinkel/-winkelbereich der optischen Struktur, die dem jeweiligen Bildabschnitt zugeordnet ist, und/oder
(cii) Betrachten jeweiliger der Vielzahl von rekonstruierten Abschnitten davon in oder über, oder nur in oder über, jeweilige der Vielzahl von unterschiedlichen (A) Betrachtungswinkel/-winkelbereichen und (B) Beleuchtungswinkel/-winkelbereichen der optischen Struktur,
je nachdem.

15. Verfahren nach Anspruch 13 oder 14, wobei der Betrachtungsschritt (b) entweder:
(i) ausgeführt wird durch:
(ia) visuelles Betrachten von mindestens einem oder einem jeweiligen Abschnitt des Bildes durch eines oder mehrere Augen eines menschlichen Betrachters, oder
(ib) Erfassen mindestens eines oder eines jeweiligen Abschnitts des Bildes unter Verwendung einer optisch empfindlichen Vorrichtung, optional in Kombination mit einer geeigneten Bildverarbeitungshardware und/oder Software; oder
(ii) umfasst:
Betrachten eines ersten der Vielzahl von Abschnitten des rekonstruierten Bildes mittels eines ersten Betrachtungsschritts oder Vorgangs, in dem nur der erste Abschnitt nur des rekonstruierten Bildes betrachtet wird; und optional
einen oder mehrere zusätzliche oder weitere Betrachtungsschritte oder -vorgänge, in denen jeweils ein zusätzlicher oder weiterer der Vielzahl von Abschnitten des rekonstruierten Bildes betrachtet wird;
und ferner optional wobei in jedem der Betrachtungsschritte oder -vorgänge das Betrachten jedes jeweiligen Abschnitts des rekonstruierten Bildes durch (K) Betrachten jedes jeweiligen Abschnitts des Bildes in oder über einen gegebenen, oder in oder über einen einzigartigen Betrachtungswinkel oder -winkelbereich relativ zu der optischen Struktur, und durch (L) Beleuchten der optischen Struktur in oder über einen gegebenen, oder in oder über einen einzigartigen Beleuchtungswinkel oder -winkelbereich ausgeführt wird, der diesem jeweiligen Bildabschnitt zugeordnet ist;
oder (iii) sowohl (i) als auch (ii) oben vorhanden oder erfüllt sind.

16. Verfahren nach einem der Ansprüche 13 bis 15, wobei das gesamte vollständige rekonstruierte Bild eine solche Größe aufweist, die größer als die der Teile der optischen Struktur, in der die verschiedenen Abschnitte des Bildes aufgezeichnet oder codiert sind, dass sie nur in ihrer Vollständigkeit nach einer Vielzahl von einzelnen oder diskreten Betrachtungsschritten oder -vorgängen sichtbar ist, die ausgeführt werden, wobei jeder solche Betrachtungsschritt oder -vorgang derart ist, dass er nur einen jeweiligen Abschnitt, optional nur einen jeweiligen diskreten Abschnitt des vollständigen rekonstruierten Bildes und ferner optional nur einen jeweiligen diskreten Abschnitt des vollständigen rekonstruierten Bildes unabhängig von der Betrachtung eines der anderen Abschnitte des vollständigen rekonstruierten Bildes betrachtet.

17. Verfahren nach einem der Ansprüche 13 bis 16, wobei:
mehrzahlige Abschnitte des vollständigen rekonstruierten Bildes unabhängig voneinander sichtbar sind, und
wobei das Betrachten des vollständigen rekonstruierten Bildes durch Beleuchten entsprechender jeweiliger Abschnitte des aufgezeichneten oder codierten Bildes in einer Vielzahl von diskreten Beleuchtungsschritten oder -vorgängen erreicht wird, wobei das Betrachten des vollständigen rekonstruierten Bildes erreicht wird, indem das aufgenommene oder codierte Bild nacheinander in einer Reihe von diskreten Betrachtungsschritten oder -vorgängen beleuchtet wird, jeweils in oder über einen jeweiligen ausgewählten von einer Vielzahl von unterschiedlichen Einfallwinkeln oder Einfallwinkelbereichen des einfallenden Lichts, sodass jeder jeweilige Einfallwinkel oder -winkelbereich dem Betrachten eines jeweiligen Abschnitts des rekonstruierten Bildes in oder über einen jeweiligen andren Betrachtungswinkel/-winkelbereich relativ zu der optischen Struktur entspricht und dieses ermöglicht.

## Revendications

1. Dispositif de sécurité optique (1) comprenant une représentation enregistrée ou codée d'une image optiquement variable (40), l'image pouvant être reconstruite et visualisée pour des objectifs de sécurité, d'authentification ou d'identification, le dispositif comprenant:
une structure optique (30) dans laquelle une représentation de l'image optiquement variable est enregistrée ou codée sous la forme d'une pluralité de parties de l'image complète à reconstruire,
**caractérisé en ce que:**
ladite pluralité respective de parties de l'image optiquement variable peut, lorsqu'elle est reconstruite, être visualisée uniquement dans sa totalité en visualisant ladite image par chacun des (A) selon ou sur une pluralité d'angles (70) ou plages d'angles de visualisation différents par rapport à la structure optique, et (B) selon ou sur une pluralité d'angles ou de plages d'angles d'éclairage différents de la structure optique;
et la taille, dans au moins une dimension, une direction, un axe ou un plan, de l'image complète, lorsqu'elle est reconstruite, étant supérieure à la taille correspondante (20), dans la même dimension, la même direction, le même axe ou le même plan, ou respectivement les mêmes, d'une part de la structure optique dans laquelle ladite pluralité de parties de l'image est collectivement enregistrée ou codée.

2. Dispositif de sécurité optique selon la revendication 1, la structure optique ayant une représentation de l'image optiquement variable sous la forme d'une pluralité de parties de l'image complète à reconstruire enregistrée ou codée dans celle-ci,
chaque partie respective de certaines ou de toutes les parties de ladite pluralité de parties de l'image optiquement variable peut, lorsqu'elle est reconstruite, être visualisée uniquement dans sa totalité en visualisant ladite partie d'image respective par chacun des (C) selon ou sur une plage respective d'angles de visualisation par rapport à la structure optique, et (D) selon ou sur une plage respective d'angles d'éclairage de la structure optique.

3. Dispositif de sécurité optique selon la revendication 1, la structure optique ayant une représentation de l'image optiquement variable sous la forme d'une pluralité de parties discrètes de l'image complète à reconstruire enregistrée ou codée dans celle-ci,
chaque partie respective de ladite pluralité de parties de l'image optiquement variable peut, lorsqu'elle est reconstruite, être visualisée uniquement en visualisant ladite partie d'image respective par chacun des (E) selon ou sur un angle ou une plage d'angle de visualisation respectif par rapport à la structure optique, et (F) selon ou sur un angle ou une plage d'angle d'éclairage respectif de la structure optique, qui sont, respectivement, différent de (E) l'angle/plage d'angle de visualisation et de (F) l'angle/plage d'angle d'éclairage selon ou sur lesquels au moins une autre desdites parties d'image peut être visualisée lorsqu'elle est reconstruite.

4. Dispositif de sécurité optique selon la revendication 1, soit:
(i) un (G) angle/plage d'angle de visualisation et (H) angle/plage d'angle d'éclairage respectifs selon ou sur lesquels une, ou une quelconque, partie d'image donnée des parties d'image peut être visualisée, lorsqu'elle est reconstruite, étants, respectivement, sensiblement le même (G) angle/plage d'angle de visualisation et (H) l'angle/plage d'angle d'éclairage selon ou sur lesquels au moins une autre desdites parties d'image, mais pas toutes les autres dites parties d'image, (éventuellement ou au moins certaines, mais pas toutes, les parties d'image reconstruites restantes) peuvent être visualisées lorsqu'elle est reconstruite; soit
(ii) un (G) angle/plage d'angle de visualisation et (H) angle/plage d'angle d'éclairage respectifs selon ou sur lesquels une, ou une quelconque, partie d'image donnée des parties d'image peut être visualisée, lorsqu'elle est reconstruite, étants, respectivement, sensiblement différents du ou des (G) angles/plages d'angle de visualisation et du ou des (H) angles/plages d'angle d'éclairage respectifs selon ou sur lesquels au moins une autre des parties d'image reconstruite (éventuellement ou au moins certaines des parties d'image reconstruite restantes) peuvent être visualisées;
moyennant quoi, dans l'un ou l'autre cas (i) ou (ii), afin que l'image reconstruite complète puisse être visualisée dans sa totalité, de telle sorte que toutes les parties de l'image reconstruite complète puissent chacune être reconstruites et visualisées respectivement, il est nécessaire qu'au moins deux (G) angles/plages d'angle de visualisation différents et au moins deux (H) angles/plages d'angles d'éclairage différents soient utilisés pour visualiser toutes les parties d'image reconstruites.

5. Dispositif de sécurité optique selon la revendication 1, un (I) angle/plage d'angle de visualisation et (J) angle/plage d'angle d'éclairage respectifs selon ou sur lesquels une, ou une quelconque, partie d'image donnée des parties d'image peut être visualisée, lorsqu'elle est reconstruite, étants, respectivement, sensiblement différents des (I) angles/plages d'angle de visualisation et (J) angles/plages d'angle d'éclairage respectifs selon ou sur lesquels sensiblement toutes les autres parties d'image reconstruites peuvent être visualisées;
moyennant quoi afin que l'image reconstruite complète puisse être visualisée dans sa totalité, de telle sorte que toutes les parties de l'image reconstruite complète puissent chacune être reconstruites et visualisées respectivement, il est nécessaire qu'une pluralité (I) d'angles/plages d'angle de visualisation différents et une pluralité (J) d'angles/plages d'angle d'éclairage différents soient utilisés pour visualiser les parties respectives de la pluralité de parties d'image reconstruites;
éventuellement chaque (I) angle/plage d'angle de visualisation et (J) angle/plage d'angle d'éclairage respectifs selon ou sur lesquels une partie d'image reconstruite respective peut être visualisée étants uniques à cette partie d'image reconstruite respective.

6. Dispositif de sécurité optique selon l'une quelconque des revendications précédentes, soit:
(i) la taille, dans au moins une dimension, une direction, un axe ou un plan, d'une ou plusieurs des parties données des parties qui peuvent être visualisées de l'image reconstruite étant supérieure à la taille correspondante, dans la même dimension, la même direction, le même axe ou le même plan, ou respectivement les mêmes, d'une part de la structure optique dans laquelle ladite ou lesdites parties d'image optiquement variable données sont enregistrées ou codées; soit
(ii) la taille, dans au moins une dimension, une direction, un axe ou un plan, d'une part donnée de la structure optique ayant une ou plusieurs parties données de la ou des parties d'image optiquement variable enregistrées ou codées dans celle-ci étant inférieure à la taille correspondante, dans la même direction, la même dimension, le même axe ou le même plan, ou respectivement les mêmes, de ladite ou desdites parties pouvant être visualisées respectives de l'image reconstruite;
éventuellement la différence de taille de la partie d'image reconstruite ou de la partie d'image reconstruite respective par rapport à la partie d'image enregistrée ou codée ou à la partie d'image enregistrée ou codée respective de la structure étant telle que la partie d'image reconstruite respective est l'une quelconque parmi: > 1 fois, ou 2 fois, ou ≥ 3 fois, ou ≥ 4 fois, ou ≥ 5 fois, ou ≥ 6 fois, ou ≥ 7 fois, ou ≥ 8 fois, ou ≥ 9 fois, ou ≥ 10 fois, ou ≥ 12 fois ou ≥ 13 fois ou ≥ 15 fois ou ≥ 18 fois ou ≥ 20 fois, la taille de la partie d'image enregistrée respective de la structure (l'une quelconque desdites plages comportant des fractions ainsi que des multiples de nombres entiers).

7. Dispositif de sécurité optique selon l'une quelconque des revendications précédentes, la taille angulaire de l'image reconstruite étant > 1 fois, éventuellement ≥ 2 ou ≥ 3 fois, en outre éventuellement ≥ 10 fois, et en outre éventuellement ≥ 15 ou ≥ 20 fois (lesquelles plages comportent des multiples fractionnaire ainsi que des multiples de nombres entiers) la taille angulaire de la structure optique lorsqu'elle est visualisée à partir d'une distance de visualisation donnée et/ou de l'emplacement de celle-ci.

8. Dispositif de sécurité optique selon l'une quelconque des revendications précédentes, l'un des (i), (ii) ou (iii) suivants étant présent ou satisfaisant:
(i) la représentation enregistrée ou codée de l'image optiquement variable est un hologramme; ou
(ii) la représentation enregistrée ou codée de l'image optiquement variable est un hologramme bidimensionnel (2-D) ou un hologramme tridimensionnel (3-D), et l'image optiquement variable est une image d'un ou plusieurs objets 2-D ou 3-D, d'images, de motifs, d'un ou plusieurs caractères alphanumériques ou typographiques autres, ou d'une combinaison quelconque d'au moins deux quelconques de l'un quelconque des composés précédents; ou
(iii) la structure optique ayant la ou les parties de l'image optiquement variable enregistrées ou codées dans celle-ci est ou comprend un DOVID (dispositif d'image optiquement variable à variation optique).

9. Dispositif de sécurité optique selon l'une quelconque des revendications précédentes, la structure optique définissant un plan de structure, éventuellement un plan qui est contenu dans l'épaisseur de la structure optique et/ou qui est non parallèle à la lumière incidente sur la structure optique pendant la reconstruction de l'image enregistrée ou codée, et l'image reconstruite se trouvant entièrement ou au moins partiellement d'un côté, éventuellement ou de chacun des deux côtés, dudit plan de structure;
éventuellement l'image reconstruite se trouvant hors du plan de structure sur le côté de celle-ci opposé à celui à partir duquel la lumière d'éclairage est incidente sur celle-ci.

10. Dispositif de sécurité optique selon l'une quelconque des revendications précédentes, soit:
(i) le dispositif se présentant sous la forme d'une caractéristique de sécurité qui a déjà été appliquée ou intégrée à la structure d'un article ou d'un objet dont la sécurité, l'authentification ou l'identification est nécessaire; soit
(ii) le dispositif étant prévu sous la forme d'un dispositif de sécurité ou d'un élément de sécurité discret pour application, fixation ou intégration dans la structure d'un article ou objet dont la sécurité, l'authentification ou l'identification est nécessaire.

11. Dispositif de sécurité optique selon l'une quelconque des revendications précédentes, la structure optique dans laquelle la représentation de l'image optiquement variable est enregistrée ou codée étant un corps de matériau optiquement actif, ou étant contenue à l'intérieur ou sur celui-ci,
le corps de matériau optiquement actif comprenant une feuille ou une plaque ou un film ou une couche du matériau optiquement actif avec une plage d'épaisseur allant de 0,1 ou 0,5 ou 1 ou 5 ou 10 jusqu'à 100 ou 200 ou 300 ou 400 ou 500 ou 800 ou 1 000 µm;
éventuellement une partie du corps de matériau optiquement actif dans laquelle la représentation de l'image optiquement variable est enregistrée ou codée comprenant en outre une ou plusieurs caractéristiques de sécurité dissimulées ou apparentes, additionnelles ou auxiliaires formées par des modulations de la surface, du volume ou des propriétés optiques internes de ladite partie de corps et comprenant un ou plusieurs graphiques, hologrammes, micro- ou nano- graphiques, images et structures diffractives ou non diffractives, ou images cachées.

12. Procédé de production d'un dispositif de sécurité optique tel que défini dans l'une quelconque des revendications 1 à 11, le procédé comprenant:
l'enregistrement ou le codage dans une structure optique d'une représentation enregistrée ou codée de l'image optiquement variable sous la forme d'une pluralité de parties de l'image complète à reconstruire,
ladite pluralité respective de parties de l'image optiquement variable peut, lorsqu'elle est reconstruite, être visualisée uniquement dans sa totalité en visualisant ladite image par chacun des (A) selon ou sur une pluralité d'angles ou plages d'angle de visualisation différents par rapport à la structure optique, et (B) selon ou sur une pluralité d'angles ou plages d'angle d'éclairage différents de la structure optique,
et la taille, dans au moins une dimension, une direction, un axe ou un plan, de l'image complète, lorsqu'elle est reconstruite, étant supérieure à la taille correspondante, dans la même dimension, la même direction, le même axe ou le même plan, ou respectivement les mêmes, d'une part de la structure optique dans laquelle ladite pluralité de parties de l'image sont collectivement enregistrées ou codées;
éventuellement:
(i) le procédé comprenant la formation de la structure optique, dans laquelle ladite pluralité de parties de la représentation enregistrée ou codée de l'image optiquement variable complète est enregistrée ou codée, en tant que caractéristique de sécurité optique, et soit simultanément soit ultérieurement à cet enregistrement ou codage intégrant ladite caractéristique de sécurité optique en un article ou un objet dont la sécurité, l'authentification ou l'identification est nécessaire; ou
(ii) le procédé comprenant la formation de la structure optique, dans laquelle ladite pluralité de parties de la représentation enregistrée ou codée de l'image optiquement variable complète est enregistrée ou codée, en tant que dispositif de sécurité ou élément de sécurité optique discret, et le procédé comprenant en outre une étape d'application, de fixation ou d'intégration du dispositif ou élément de sécurité optique sur ou dans la structure d'un article ou d'un objet dont la sécurité, l'authentification ou l'identification est requise.

13. Procédé d'authentification ou d'identification d'un article ou d'un objet auquel est appliqué ou fixé ou intégré dans sa structure un dispositif de sécurité optique tel que défini dans l'une quelconque des revendications 1 à 11, le procédé comprenant:
(a) la reconstruction de ladite pluralité de parties de l'image optiquement variable complète enregistrée ou codée dans la structure optique du dispositif ; et
(b) la visualisation d'une ou plusieurs de ladite pluralité de parties reconstruites de l'image complète;
éventuellement l'image optiquement variable enregistrée ou codée, ou des parties respectives de celle-ci, étant reconstruite par un éclairage de la structure optique, ou une part ou partie ou région respective de celle-ci, par un rayonnement électromagnétique, le rayonnement électromagnétique étant d'une longueur d'onde/fréquence appropriée au moyen utilisé pour enregistrer/coder et/ou destiné à la reconstruction de l'image, éventuellement le rayonnement électromagnétique comprenant de la lumière visible.

14. Procédé selon la revendication 13, le dispositif de sécurité optique étant un dispositif de sécurité optique dans lequel:
la structure optique dans laquelle une représentation de l'image optiquement variable est enregistrée ou codée sous la forme d'une pluralité de parties discrètes de l'image complète à reconstruire, et:
(i) chaque partie respective de ladite pluralité de parties de l'image optiquement variable peut, lorsqu'elle est reconstruite, être visualisée uniquement en visualisant ladite partie d'image respective par chacun des (E) selon ou sur un angle ou une plage d'angle de visualisation respectif par rapport à la structure optique, et (F) selon ou sur un angle ou une plage d'angle d'éclairage respectif de la structure optique, qui sont, respectivement, différent de (E) l'angle/plage d'angle de visualisation et de (F) l'angle/plage d'angle d'éclairage selon ou sur lesquels au moins une autre desdites parties d'image peut être visualisée lorsqu'elle est reconstruite; ou
(ii) (G) l'angle/plage d'angle de visualisation et (H) l'angle/plage d'angle d'éclairage respectifs selon ou sur lesquels une, ou une quelconque, partie d'image donnée des parties d'image peut être visualisée, lorsqu'elle est reconstruite, sont, respectivement, sensiblement le même (G) angle/plage d'angle de visualisation et (H) angle/plage d'angle d'éclairage selon ou sur lesquels au moins une autre desdites parties d'image, mais pas toutes les autres dites parties d'image, (éventuellement ou au moins certaines de, mais pas toutes, les parties d'image reconstruite restantes) peuvent être visualisées lorsqu'elles sont reconstruites; ou
(iii) (I) l'angle/plage d'angle de visualisation et (J) l'angle/plage d'angle d'éclairage respectifs selon ou sur lesquels une, ou une quelconque, partie d'image donnée des parties d'image peut être visualisée, lorsqu'elle est reconstruite, sont, respectivement, sensiblement différents du ou des (I) angles/plages d'angle de visualisation et du ou des (J) angles/plages d'angle d'éclairage selon ou sur lesquels au moins une autre des parties d'image reconstruites (éventuellement ou au moins certaines des parties d'image reconstruites restantes) peut être visualisée;
l'étape de visualisation (b) comprenant:
(bi) la visualisation de la ou de chaque partie respective de la pluralité de parties reconstruites de l'image variable optique complète par (K) selon ou sur, ou uniquement selon ou sur, l'angle ou la plage d'angle de visualisation respectif par rapport à la structure optique, et (L) en éclairant la structure optique selon ou sur l'angle ou la plage d'angle d'éclairage respectif, qui sont associés à cette partie d'image reconstruite respective de l'image complète; et/ou
(bii) la visualisation des parties respectives de la pluralité de parties reconstruites de l'image optiquement variable complète selon ou sur, ou seulement selon ou sur, des parties respectives de la pluralité (A) d'angle/plages d'angle de visualisation et (B) d'angles/plages d'angle d'éclairage différents de la structure optique;
moyennant quoi l'image optiquement variable reconstruite complète peut être visualisée dans sa totalité, de telle sorte que toutes les parties de l'image reconstruite complète peuvent chacune être reconstruites et visualisées, par ou seulement par:
(ci) la visualisation de la ou de chaque partie respective de celle-ci selon ou sur, ou seulement selon ou sur, (K) l'angle/plage d'angle de visualisation et (L) l'angle/plage d'angle d'éclairage respectifs ou l'angle/plage d'angle d'éclairage respectif de la structure optique qui est associé à cette partie d'image respective, et/ou
(cii) la visualisation des parties respectives de la pluralité de parties reconstruites de celles-ci selon ou sur, ou seulement selon ou sur, les parties respectives de la pluralité (A) d'angles/plages d'angle de visualisation et (B) d'angles/plages d'angle d'éclairage différents de la structure optique,
le cas échéant.

15. Procédé selon la revendication 13 ou la revendication 14, l'étape de visualisation (b):
(i) étant soit réalisée par:
(ia) une visualisation visuelle d'au moins une ou d'une partie respective de l'image par un ou plusieurs yeux d'un observateur humain, ou
(ib) la détection d'au moins une ou d'une partie respective de l'image à l'aide d'un dispositif optiquement sensible, éventuellement en combinaison avec un matériel et/ou un logiciel de traitement d'image approprié; soit
(ii) comprenant:
la visualisation d'une première partie de la pluralité de parties de l'image reconstruite au moyen d'une première étape ou opération de visualisation dans laquelle seulement la première partie unique de l'image reconstruite est visualisée; et éventuellement
une ou plusieurs étapes ou opérations de visualisation supplémentaires ou additionnelles dans chacune desquelles une ou plusieurs parties supplémentaires ou additionnelles respectives de la pluralité de parties de l'image reconstruite sont visualisées;
et en outre éventuellement, dans chacune desdites étapes ou opérations de visualisation la visualisation de chaque partie respective de l'image reconstruite étant réalisée (K) en visualisant chaque partie respective de l'image selon ou sur, ou selon ou sur uniquement, un angle ou plage d'angle de visualisation donné, par rapport à la structure optique, et (L) en éclairant la structure optique selon ou sur, ou selon ou sur uniquement, un angle ou plage d'angle d'éclairage donné qui est associé à cette partie d'image respective;
ou (iii) à la fois (i) et (ii) ci-dessus étant présents ou satisfaits.

16. Procédé selon l'une quelconque des revendications 13 à 15, l'image reconstruite complète totale étant d'une taille, supérieure à celle des parts de la structure optique dans laquelle sont enregistrées ou codées les diverses parties de l'image, qui peut être visualisée uniquement dans son intégralité lors d'une pluralité d'étapes ou d'opérations de visualisation individuelles ou discrètes réalisée, chacune de ces étapes ou opérations de visualisation individuelles étant telle que pour visualiser une partie respective uniquement, éventuellement une partie discrète respective uniquement, de l'image reconstruite complète, et en outre éventuellement une partie discrète respective uniquement de l'image reconstruite complète indépendamment de la visualisation de l'une quelconque de la ou des autres parties de l'image reconstruite complète.

17. Procédé selon l'une quelconque des revendications 13 à 16:
plusieurs parties de l'image reconstruite complète pouvant être visualisées indépendamment l'une de l'autre, et
la visualisation de l'image reconstruite complète étant accomplie en éclairant des parties respectives correspondantes de l'image enregistrée ou codée dans une pluralité d'étapes ou opérations d'éclairage discrètes, la visualisation de l'image reconstruite complète étant accomplie en éclairant l'image enregistrée ou codée séquentiellement dans une série d'étapes ou d'opérations de visualisation discrètes, chacune selon ou sur l'un respectif choisi parmi une pluralité d'angles d'incidence ou de plages d'angles d'incidence différents de la lumière entrante, de telle sorte que chaque angle d'incidence ou plage d'angle d'incidence respectif correspond à une partie respective de l'image reconstruite et permet la visualisation de celle-ci selon ou sur un angle/plage d'angle de visualisation respectif différent par rapport à la structure optique.
